# EUROPEAN PATENT APPLICATION

(11) **EP 4 832 428 A1**
(43) Date of publication of application: **28.10.2026**
(21) Application number: 24905748.0
(22) Date of filing: 08.10.2024
(51) Int. Cl.: H04L 27/00

(54) **SIGNAL PROCESSING METHOD AND APPARATUS, AND READABLE STORAGE MEDIUM**

(30) Priority: 20.12.2023 CN 202311767892
(71) Applicant: Datang Mobile Communications Equipment Co., Ltd., Beijing 100085 (CN)
(72) Inventor: LI, Yaomin, Beijing 100085 (CN); WANG, Jiaqing, Beijing 100085 (CN); YANG, Meiying, Beijing 100085 (CN); LIU, Miaomiao, Beijing 100085 (CN)
(74) Representative: Maiwald GmbH
(86) International application number: PCT/CN2024/123384
(87) International publication number: WO 2025/130258

(57) **Abstract**

This disclosure provides a signal processing method and apparatus, and readable storage medium, and relates to the field of communication technology, to reduce signal resource overhead. The method includes: receiving a first signal; wherein the first signal includes a first sequence and a second sequence, the first sequence and the second sequence being used for carrying at least one of the following information for a same terminal or terminal group: wake-up indication information, wake-up terminal information, or wake-up terminal group information; the first sequence and the second sequence correspond to different types of waveforms.

## Description

### CROSS-REFERENCE TO RELATED APPLICATION

This application claims priority to Chinese Patent Application No. 202311767892.3, filed on December 20, 2023, entitled "signal processing method and apparatus, and readable storage medium", disclosure of which is incorporated herein by reference in its entirety.

### TECHNICAL FIELD

This disclosure relates to the field of communication technology, and in particular to a signal processing method and apparatus, and readable storage medium.

### BACKGROUND

Related technologies have proposed the concepts of low power wake-up signal (LP-WUS) and low power wake-up receiver (LP-WUR) to reduce power consumption of terminals. In radio resource control (RRC) idle mode (RRC_IDLE mode), when there is no service transmission between the base station and the terminal, shutting down the power-intensive main radio (MR) allows the terminal to enter an ultra-deep sleep state. Simultaneously, the LP-WUR device is activated to receive the LP-WUS signal sent by the base station to determine whether the MR needs to be woken up for communication with the base station. This significantly reduces terminal power consumption.

Considering that LP-WUS devices include both radio frequency (RF) or baseband low-power receivers based on On-Off Keying (OOK) signal reception and OFDM low-power receivers based on orthogonal frequency division multiplexing (OFDM) signal reception, and that these two types of receivers have their own dedicated LP-WUS signal reception waveforms, namely, OOK waveform and OFDM waveform, it is necessary to design a signal suitable for both waveforms.

### SUMMARY

Embodiments of this disclosure provide a signal processing method, apparatus, and readable storage medium, to reduce signal resource overhead.

In a first aspect, an embodiment of this disclosure provides a signal processing method, performed by a terminal, including:
receiving a first signal;
wherein the first signal includes a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

In some embodiments, the different types of waveforms include any two of the following:
amplitude shift keying (ASK) waveform, frequency shift keying (FSK) waveform, and orthogonal frequency division multiplexing (OFDM) waveform.

In some embodiments, receiving the first signal includes:
determining first information; and
receiving the first signal based on the first information, wherein the first information includes one or more of the following:
   generation information of the first signal;
   time domain resource position information of the first signal;
   frequency domain resource position information of the first signal.

In some embodiments, the generation information of the first signal includes one or more of the following:
a length of the first signal;
transmission bit information of the first signal;
time-frequency resource mapping information of the first signal;
time domain resource position information of the first signal;
frequency domain resource position information of the first signal;
a quantity of terminals indicated by the first signal;
a quantity of terminal groups indicated by the first signal;
a quantity of paging occasions (POs) associated with the first signal;
structural information of the first sequence;
generation information of the first sequence;
coding and modulation information of the first sequence;
length information of the first sequence;
information about a manner in which the second sequence is scrambled by the first sequence;
generation sequence information of the second sequence;
length information of the second sequence;
time domain resource position information of the second sequence;
frequency domain resource position information of the second sequence;
waveform information of the second sequence;
structural information of the second sequence;
coding and modulation information of the second sequence;
a quantity of bits of the first signal or the second sequence that are carried in one OFDM symbol.

In some embodiments, a length of the first signal has an association relationship with one or more of the following:
a length of the first sequence, a length of the second sequence, a bandwidth of the first signal, coding and modulation information of the second sequence, a quantity of bits of the first signal or the second sequence that are carried by one OFDM symbol, and a subcarrier spacing.

In some embodiments, the association relationship includes one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein L denotes a signal bit length or time domain duration of the first signal, M denotes the quantity of bits of the first signal or the second sequence that are carried by one OFDM symbol, A, B and C are related to one or more of the following: a quantity of resource elements (REs) or resource blocks (RBs) occupied by the first signal in frequency domain, the bandwidth of the first signal, the subcarrier spacing, the length of the first sequence, the quantity M of bits of the first signal or the second sequence that are carried by one OFDM symbol, and the coding and modulation information of the second sequence, ceiling denotes a ceiling function, and L1 denotes an information bit length or transmission bit length of the second sequence.

In some embodiments, the position where the second sequence is scrambled by the first sequence is related to one or more of the following: bit information of the first sequence, bit information of the second sequence, the wake-up terminal information carried by the second sequence, the wake-up terminal group information carried by the second sequence, and the wake-up indication information carried by the second sequence; and/or
transmission bit information of the first signal is related to one or more of the following: the bit information of the second sequence, bit information of a generation sequence of the second sequence, and the bit information of the first sequence.

In some embodiments, the position where the second sequence is scrambled by the first sequence includes one or more of the following:
at least one sequence position having an information bit of 1 in the generation sequence of the second sequence, or a time domain resource position and/or frequency domain resource position to which the at least one sequence position having the information bit of 1 is mapped;
at least one sequence position having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position carrying the same wake-up indication information, the same wake-up terminal information, or the same wake-up terminal group information as that carried by the first sequence and having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position having an information bit of a1+b1×j in the generation sequence of the second sequence, or a time domain resource position and/or frequency domain resource position to which the at least one sequence position having the information bit of a1+b1×j is mapped;
at least one sequence position having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position carrying the same wake-up indication information, the same wake-up terminal information, or the same wake-up terminal group information as that carried by the first sequence and having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position being associated with or having the same index as a wake-up terminal index or a wake-up terminal group index carried by the first sequence and having an information bit of 1 in a preamble field of the second sequence, or a time domain resource position and/or frequency domain resource position to which the at least one sequence position having the information bit of 1 is mapped;
at least one sequence position being associated with or having the same index as the wake-up terminal index or the wake-up terminal group index carried by the first sequence and having an information bit of a1+b1×j in the preamble field of the second sequence, or a time domain resource position and/or frequency domain resource position to which the at least one sequence position having the information bit of a1+b1×j is mapped;
at least one sequence position having an information bit of a2+b2×j after coding and modulation in the second sequence, or a time domain resource position and/or frequency domain resource position to which the at least one sequence position having the information bit of a2+b2×j is mapped;
wherein a1, b1, a2 and b2 are any real numbers.

In some embodiments, the first signal is generated in one or more of the following manners:
at least one position having bit information of 0 in the second sequence is mapped to a number T of zeros, wherein T is related to one or more of a length of the first sequence, a bandwidth of the first signal, and a subcarrier spacing, and T is an integer greater than or equal to 1;
at least one position having bit information of 1 in the second sequence is mapped to at least one first sequence;
at least one position having bit information of a1+b1×j or a2+b2×j in the second sequence is mapped to at least one first sequence;
at least one position having bit information of a1+b1×j or a2+b2×j in the second sequence is mapped to at least one product of a1+b1×j and the first sequence or is mapped to at least one product of a2+b2×j and the first sequence;
wherein a1, b1, a2 and b2 are any real numbers.

In some embodiments, the time-frequency resource mapping information of the first signal includes a time-frequency resource mapping manner for the first signal, wherein the time-frequency resource mapping manner includes:
one bit of the first signal is mapped to one RE resource; or
one bit of the first signal is mapped to P consecutive or non-consecutive REs or RBs, wherein P is related to one or more of the following: the quantity of bits M of the first signal or second sequence carried by a single OFDM symbol, the number of points of the least square (LS) or discrete Fourier transform (DFT) of the second sequence, the bandwidth of the first signal, and a subcarrier spacing, and P is an integer greater than or equal to 1.

In some embodiments, the first sequence is generated based on an OFDM waveform and is used for carrying a wake-up signal specific to a first type of receiver;
the second sequence is generated based on an ASK or FSK waveform and is used for carrying a wake-up signal specific to a second type of receiver;
wherein the first type of receiver includes an OFDM receiver, and the second type of receiver includes a baseband receiver or a radio frequency receiver.

In some embodiments, the first sequence is an orthogonal sequence or a random sequence; or
the first sequence is an orthogonal sequence or a random sequence, and the first sequence is generated by cyclic shifting a base sequence; or
the first sequence is an orthogonal sequence or a random sequence, and the first sequence is generated based on a third sequence;
   and/or
the second sequence is generated based on an ASK signal or an FSK signal; or
the second sequence is generated based on an ASK signal or an FSK signal, and the second sequence is generated by coding and modulating a generation sequence; or
the second sequence is generated based on an ASK signal or an FSK signal, and the second sequence is a generation sequence.

In some embodiments, the method further includes:
obtaining the wake-up indication information based on the first signal, wherein the obtaining the wake-up indication information based on the first signal includes:
obtaining the first sequence;
obtaining the wake-up indication information carried by the first sequence and/or the wake-up indication information carried by the second sequence.

In some embodiments, one or more of the first sequence, the second sequence, the wake-up terminal information, and the wake-up terminal group information are related to one or more of the following information:
cell identifier (cell ID), user equipment identifier (UE ID), paging occasion (PO) index, paging frame (PF) index, subgroup index, UE group ID, and area ID.

In a second aspect, an embodiment of this disclosure provides a signal processing method, performed by a network device, including:
sending first information to a terminal;
wherein the first information is used for receive a first signal, the first signal includes a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

In some embodiments, the different types of waveforms include any two of the following:
ASK waveform, FSK waveform, and OFDM waveform.

In some embodiments, the first information includes one or more of the following:
generation information of the first signal;
time domain resource position information of the first signal;
frequency domain resource position information of the first signal.

In some embodiments, the generation information of the first signal includes one or more of the following:
a length of the first signal;
transmission bit information of the first signal;
time-frequency resource mapping information of the first signal;
time domain resource position information of the first signal;
frequency domain resource position information of the first signal;
a quantity of terminals indicated by the first signal;
a quantity of terminal groups indicated by the first signal;
a quantity of POs associated with the first signal;
structural information of the first sequence;
generation information of the first sequence;
a length of the first sequence;
coding and modulation information of the first sequence;
information about a manner in which the second sequence is scrambled by the first sequence;
generation sequence information of the second sequence;
time domain resource position information of the second sequence;
frequency domain resource position information of the second sequence;
waveform information of the second sequence;
structural information of the second sequence;
a length of the second sequence;
coding and modulation information of the second sequence;
a quantity of bits of the first signal or the second sequence that are carried in one OFDM symbol.

In some embodiments, a length of the first signal has an association relationship with one or more of the following:
a length of the first sequence, a length of the second sequence, a bandwidth of the first signal, a quantity of bits of the first signal or the second sequence that are carried by one OFDM symbol, and a subcarrier spacing; or,
transmission bit information of the first signal is related to one or more of the following: bit information of the second sequence, bit information of a generation sequence of the second sequence, and bit information of the first sequence; or,
time-frequency resource mapping information of the first signal includes a time-frequency resource mapping manner for the first signal, wherein the time-frequency resource mapping manner includes:
   one bit of the first signal is mapped to one RE resource; or
   one bit of the first signal is mapped to P consecutive or non-consecutive REs or RBs, wherein P is related to one or more of the following: the quantity of bits of the first signal or the second sequence that are carried by one OFDM symbol, a quantity of points for least squares (LS) or discrete Fourier transform (DFT) of the second sequence, the bandwidth of the first signal, and the subcarrier spacing, and P is an integer greater than or equal to 1.

In some embodiments, the association relationship includes one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, and the quantity of bits of the first signal or the second sequence that are carried by one OFDM symbol, ceiling denotes a ceiling function, and L1 denotes an information bit length or transmission bit length of the second sequence.

In a third aspect, an embodiment of this disclosure provides a signal processing apparatus applied to a terminal, including: a memory, a transceiver, and a processor;
wherein the memory is used for storing a computer program; the transceiver is used for transmitting and receiving data under the control of the processor; and the processor is used for reading the computer program from the memory and performing the following step:
receiving a first signal;
wherein the first signal includes a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

In some embodiments, the different types of waveforms include any two of the following:
ASK waveform, FSK waveform, and OFDM waveform.

In some embodiments, the processor is further configured to read the computer program from the memory and perform the following steps:
determining first information; and
receiving the first signal based on the first information, wherein the first information includes one or more of the following:
   generation information of the first signal;
   time domain resource position information of the first signal;
   frequency domain resource position information of the first signal.

In some embodiments, the generation information of the first signal includes one or more of the following:
a length of the first signal;
transmission bit information of the first signal;
time-frequency resource mapping information of the first signal;
time domain resource position information of the first signal;
frequency domain resource position information of the first signal;
a quantity of terminals indicated by the first signal;
a quantity of terminal groups indicated by the first signal;
a quantity of POs associated with the first signal;
structural information of the first sequence;
generation information of the first sequence;
coding and modulation information of the first sequence;
length information of the first sequence;
information about a manner in which the second sequence is scrambled by the first sequence;
generation sequence information of the second sequence;
length information of the second sequence;
time domain resource position information of the second sequence;
frequency domain resource position information of the second sequence;
waveform information of the second sequence;
structural information of the second sequence;
coding and modulation information of the second sequence;
a quantity of bits of the first signal or the second sequence that are carried in one OFDM symbol.

In some embodiments, a length of the first signal has an association relationship with one or more of the following:
a length of the first sequence, a length of the second sequence, a bandwidth of the first signal, coding and modulation information of the second sequence, a quantity of bits of the first signal or the second sequence that are carried by one OFDM symbol, and a subcarrier spacing.

In some embodiments, the association relationship includes one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, the quantity of bits of the first signal or the second sequence that are carried by one OFDM symbol, and the coding and modulation information of the second sequence, ceiling denotes a ceiling function, and L1 denotes an information bit length or transmission bit length of the second sequence.

In some embodiments, the position where the second sequence is scrambled by the first sequence is related to one or more of the following: bit information of the first sequence, bit information of the second sequence, the wake-up terminal information carried by the second sequence, the wake-up terminal group information carried by the second sequence, and the wake-up indication information carried by the second sequence; and/or
transmission bit information of the first signal is related to one or more of the following: the bit information of the second sequence, bit information of a generation sequence of the second sequence, and the bit information of the first sequence.

In some embodiments, the position where the second sequence is scrambled by the first sequence includes one or more of the following:
at least one sequence position having an information bit of 1 in the generation sequence of the second sequence, or a time domain resource position and/or frequency domain resource position to which the at least one sequence position having the information bit of 1 is mapped;
at least one sequence position having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position carrying the same wake-up indication information, the same wake-up terminal information, or the same wake-up terminal group information as that carried by the first sequence and having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position having an information bit of a1+b1×j in the generation sequence of the second sequence, or a time domain resource position and/or frequency domain resource position to which the at least one sequence position having the information bit of a1+b1×j is mapped;
at least one sequence position having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position carrying the same wake-up indication information, the same wake-up terminal information, or the same wake-up terminal group information as that carried by the first sequence and having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position being associated with or having the same index as a wake-up terminal index or a wake-up terminal group index carried by the first sequence and having an information bit of 1 in a preamble field of the second sequence, or a time domain resource position and/or frequency domain resource position to which the at least one sequence position having the information bit of 1 is mapped;
at least one sequence position being associated with or having the same index as the wake-up terminal index or the wake-up terminal group index carried by the first sequence and having an information bit of a1+b1×j in the preamble field of the second sequence, or a time domain resource position and/or frequency domain resource position to which the at least one sequence position having the information bit of a1+b1×j is mapped;
at least one sequence position having an information bit of a2+b2×j after coding and modulation in the second sequence, or a time domain resource position and/or frequency domain resource position to which the at least one sequence position having the information bit of a2+b2×j is mapped;
wherein a1, b1, a2 and b2 are any real numbers.

In some embodiments, the first signal is generated in one or more of the following manners:
at least one position having bit information of 0 in the second sequence is mapped to a number T of zeros, wherein T is related to one or more of a length of the first sequence, a bandwidth of the first signal, and a subcarrier spacing, and T is an integer greater than or equal to 1;
at least one position having bit information of 1 in the second sequence is mapped to at least one first sequence;
at least one position having bit information of a1+b1×j or a2+b2×j in the second sequence is mapped to at least one first sequence;
at least one position having bit information of a1+b1×j or a2+b2×j in the second sequence is mapped to at least one product of a1+b1×j and the first sequence or is mapped to at least one product of a2+b2×j and the first sequence;
wherein a1, b1, a2 and b2 are any real numbers.

In some embodiments, the time-frequency resource mapping information of the first signal includes a time-frequency resource mapping manner for the first signal, wherein the time-frequency resource mapping manner includes:
one bit of the first signal is mapped to one RE resource; or
one bit of the first signal is mapped to P consecutive or non-consecutive REs or RBs, wherein P is related to one or more of the following: the quantity of bits of the first signal or the second sequence that are carried by one OFDM symbol, a quantity of points for least squares (LS) or discrete Fourier transform (DFT) of the second sequence, the bandwidth of the first signal, and a subcarrier spacing, and P is an integer greater than or equal to 1.

In some embodiments, the first sequence is generated based on an OFDM waveform and is used for carrying a wake-up signal specific to a first type of receiver;
the second sequence is generated based on an ASK or FSK waveform and is used for carrying a wake-up signal specific to a second type of receiver;
wherein the first type of receiver includes an OFDM receiver, and the second type of receiver includes a baseband receiver or a radio frequency receiver.

In some embodiments, the first sequence is an orthogonal sequence or a random sequence; or
the first sequence is an orthogonal sequence or a random sequence, and the first sequence is generated by cyclic shifting a base sequence; or
the first sequence is an orthogonal sequence or a random sequence, and the first sequence is generated based on a third sequence;
   and/or
the second sequence is generated based on an ASK signal or an FSK signal; or
the second sequence is generated based on an ASK signal or an FSK signal, and the second sequence is generated by coding and modulating a generation sequence; or
the second sequence is generated based on an ASK signal or an FSK signal, and the second sequence is a generation sequence.

In some embodiments, the processor is further used for reading the computer program from the memory and performing the following step: obtaining the wake-up indication information based on the first signal, wherein the obtaining the wake-up indication information based on the first signal includes:
obtaining the first sequence;
obtaining the wake-up indication information carried by the first sequence and/or the wake-up indication information carried by the second sequence.

In some embodiments, one or more of the first sequence, the second sequence, the wake-up terminal information, and the wake-up terminal group information are related to one or more of the following information:
cell ID, UE ID, paging occasion (PO) index, paging frame (PF) index, subgroup index, UE group ID, and area ID.

In a fourth aspect, an embodiment of this disclosure provides a signal processing apparatus applied to a network device, including: a memory, a transceiver, and a processor;
wherein the memory is used for storing a computer program; the transceiver is used for transmitting and receiving data under the control of the processor; and the processor is used for reading the computer program from the memory and performing the following step:
sending first information to a terminal;
wherein the first information is used for receive a first signal, the first signal includes a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

In some embodiments, the different types of waveforms include any two of the following:
ASK waveform, FSK waveform, and OFDM waveform.

In some embodiments, the first information includes one or more of the following:
generation information of the first signal;
time domain resource position information of the first signal;
frequency domain resource position information of the first signal.

In some embodiments, the generation information of the first signal includes one or more of the following:
a length of the first signal;
transmission bit information of the first signal;
time-frequency resource mapping information of the first signal;
time domain resource position information of the first signal;
frequency domain resource position information of the first signal;
a quantity of terminals indicated by the first signal;
a quantity of terminal groups indicated by the first signal;
a quantity of POs associated with the first signal;
structural information of the first sequence;
generation information of the first sequence;
a length of the first sequence;
coding and modulation information of the first sequence;
information about a manner in which the second sequence is scrambled by the first sequence;
generation sequence information of the second sequence;
time domain resource position information of the second sequence;
frequency domain resource position information of the second sequence;
waveform information of the second sequence;
structural information of the second sequence;
a length of the second sequence;
coding and modulation information of the second sequence;
a quantity of bits of the first signal or the second sequence that are carried in one OFDM symbol.

In some embodiments, a length of the first signal has an association relationship with one or more of the following:
a length of the first sequence, a length of the second sequence, a bandwidth of the first signal, a quantity of bits of the first signal or the second sequence that are carried by one OFDM symbol, and a subcarrier spacing; or,
transmission bit information of the first signal is related to one or more of the following: bit information of the second sequence, bit information of a generation sequence of the second sequence, and bit information of the first sequence; or,
time-frequency resource mapping information of the first signal includes a time-frequency resource mapping manner for the first signal, wherein the time-frequency resource mapping manner includes:
   one bit of the first signal is mapped to one RE resource; or
   one bit of the first signal is mapped to P consecutive or non-consecutive REs or RBs, wherein P is related to one or more of the following: the quantity of bits of the first signal or the second sequence that are carried by one OFDM symbol, a quantity of points for least squares (LS) or discrete Fourier transform (DFT) of the second sequence, the bandwidth of the first signal, and the subcarrier spacing, and P is an integer greater than or equal to 1.

In some embodiments, the association relationship includes one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, and the quantity of bits of the first signal or the second sequence that are carried by one OFDM symbol, ceiling denotes a ceiling function, and L1 denotes an information bit length or transmission bit length of the second sequence.

In a fifth aspect, an embodiment of this disclosure provides a signal processing apparatus applied to a terminal, including:
a first receiving unit, configured to receive a first signal;
wherein the first signal includes a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

In a sixth aspect, an embodiment of this disclosure provides a signal processing apparatus applied to a server, including:
a first sending unit, configured to send first information to a terminal;
wherein the first information is used for receive a first signal, the first signal includes a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

In a seventh aspect, an embodiment of this disclosure further provides a processor-readable storage medium storing a computer program that, when executed by a processor, implements the steps in the signal processing method described above.

In the embodiments of this disclosure, the first signal includes a first sequence and a second sequence, the first sequence and the second sequence correspond to different types of waveforms and are used for carrying wake-up indication information of a same terminal or terminal group. Therefore, wake-up indication information of different waveforms can be carried by the first signal, which can reduce signal resource overhead.

### BRIEF DESCRIPTION OF THE DRAWINGS

Fig. 1 is a flowchart of a signal processing method according to an embodiment of this disclosure;
Fig. 2 is another flowchart of a signal processing method according to an embodiment of this disclosure;
Fig. 3 is a schematic diagram of a method for generating the first signal according to an embodiment of this disclosure;
Fig. 4 is a second schematic diagram of a method for generating the first signal according to an embodiment of this disclosure;
Fig. 5 is a third schematic diagram of a method for generating the first signal according to an embodiment of this disclosure;
Fig. 6 is a fourth schematic diagram of a method for generating the first signal according to an embodiment of this disclosure;
Fig. 7 is a fifth schematic diagram of a method for generating the first signal according to an embodiment of this disclosure;
Fig. 8 is a sixth schematic diagram of a method for generating the first signal according to an embodiment of this disclosure;
Fig. 9 is a seventh schematic diagram of a method for generating the first signal according to an embodiment of this disclosure;
Fig. 10 is an eighth schematic diagram of a method for generating the first signal according to an embodiment of this disclosure;
Fig. 11 is a ninth schematic diagram of a method for generating the first signal according to an embodiment of this disclosure;
Fig. 12 is a tenth schematic diagram of a method for generating the first signal according to an embodiment of this disclosure;
Fig. 13 is an eleventh schematic diagram of a method for generating the first signal according to an embodiment of this disclosure;
Fig. 14 is a structural diagram of a signal processing apparatus according to an embodiment of this disclosure;
Fig. 15 is a second structural diagram of a signal processing apparatus according to an embodiment of this disclosure;
Fig. 16 is a third structural diagram of a signal processing apparatus according to an embodiment of this disclosure;
Fig. 17 is a fourth structural diagram of a signal processing apparatus according to an embodiment of this disclosure.

### DETAILED DESCRIPTION

In the embodiments of this disclosure, the term "and/or" describes the relationship between related objects, indicating that three relationships can exist. For example, A and/or B can represent three cases: A alone, A and B simultaneously, and B alone. The character "/" generally indicates that the preceding and following related objects have an "or" relationship.

In the embodiments of this disclosure, the term "multiple" refers to two or more, and other quantifiers are similar.

Technical solutions in the embodiments of this disclosure will be clearly and completely described below with reference to the accompanying drawings. Obviously, the described embodiments are only some embodiments of this disclosure, and not all embodiments. Based on the embodiments of this disclosure, all other embodiments obtained by those of ordinary skill in the art without creative effort are within the scope of this disclosure.

Embodiments of this disclosure provide a signal processing method and apparatus to reduce signal resource overhead.

The method and apparatus are based on the same creative concept. Since the methods and apparatus solve problems in similar ways, for the implementation of one of the apparatus and method, reference can be made to the other of the apparatus and method, and the repeated parts will not be described again.

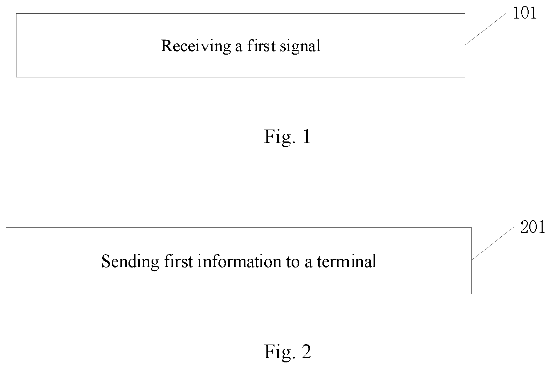

Fig. 1 is a flowchart of a signal processing method according to an embodiment of this disclosure. The method is performed by a terminal. As shown in Fig. 1, the method includes the following step:
Step 101: receiving a first signal.

The first signal includes a first sequence and a second sequence, which are used for carrying at least one of the following information for a same terminal or terminal group: wake-up indication information, wake-up terminal information, or wake-up terminal group information. The first sequence and the second sequence correspond to different types of waveforms. For example, the first signal may include one second sequence and K (K is an integer and K≥1) first sequences.

The different types of waveforms may take different forms depending on the specific implementation scenario. For example, the different types of waveforms include any two of the following: ASK waveform, FSK waveform, and OFDM waveform. For example, the different types of waveforms can be ASK waveform and FSK waveform, ASK waveform and OFDM waveform, or FSK waveform and OFDM waveform, etc. Of course, as technology develops, the waveforms included by the different types of waveforms can also be expanded accordingly.

In some embodiments, the first sequence is generated based on an OFDM waveform and is used for carrying a wake-up signal specific to the OFDM receiver; the second sequence is generated based on an ASK waveform or an FSK waveform and is used for carrying a wake-up signal specific to the baseband or radio frequency receiver (e.g., an ASK signal, an FSK signal).

In some embodiments, the first sequence is an orthogonal sequence or a random sequence, which is associated with at least one of cell ID, UE ID, PO index, PF index, subgroup index, UE group ID, area ID, or modulation scheme. Optionally, the first sequence is generated based on a base sequence through cyclic shift. For example, the first sequence is generated by cyclic shifting a base sequence by Y bits, where the value of Y is related to one or more of cell ID, UE ID, PO index, PF index, subgroup index, UE (group) ID, and area ID; the base sequence can be a gold sequence, a ZC sequence, an m sequence, or another predefined sequence. Optionally, the first sequence is generated based on a third sequence. The third sequence can be any one of a gold sequence, an m sequence, or a ZC sequence. The initial value cinit of the third sequence is related to one or more of cell ID, UE ID, PO index, PF index, subgroup index, UE (group) ID, area ID, time domain resource position, frequency domain resource position information, and configuration information of network device.

The second sequence is generated based on an ASK signal or an FSK signal, or the second sequence is generated by coding and modulating a generation sequence, or the second sequence is a generation sequence. For example, if the generation sequence is not coded or modulated, then the generation sequence can be used as a second generation sequence.

In this step, the terminal can determine first information and receive the first signal based on the first information, wherein the first information is used for receiving the first signal. The first information can be predefined in a technical protocol, or can be notified to the terminal by the network device based on at least one of the following: radio resource control (RRC) signaling, system information block (SIB) X signaling, and downlink data/control signal indication/activation (or deactivation).

In some embodiments, the first information includes one or more of the following (1), (2) and (3).
(1) Generation information of the first signal:
   the generation information of the first signal includes one or more of the following:
   a length of the first signal;
   transmission bit information of the first signal;
   time-frequency resource mapping information of the first signal;
   time domain resource position information of the first signal;
   frequency domain resource position information of the first signal;
   a quantity of terminals indicated by the first signal;
   a quantity of terminal groups indicated by the first signal;
   a quantity of POs associated with the first signal;
   structural information of the first sequence;
   generation information of the first sequence;
   coding and modulation information of the first sequence;
   length information of the first sequence;
   information about a manner in which the second sequence is scrambled by the first sequence;
   generation sequence information of the second sequence;
   length information of the second sequence;
   time domain resource position information of the second sequence;
   frequency domain resource position information of the second sequence;
   waveform information of the second sequence, such as OOK-1, OOK-4, OOK-2;
   structural information of the second sequence;
   coding and modulation information of the second sequence;
   a quantity of bits of the first signal or the second sequence that are carried in one OFDM symbol.
   a length of the first signal has an association relationship with one or more of the following:
      a length (L2) of the first sequence, a length (L1) of the second sequence, a bandwidth (W) of the first signal (which may be the quantity of REs, the quantity of RBs, etc.), the coding and modulation information of the second sequence, the quantity of bits of the first signal or the second sequence that are carried by one OFDM symbol, and a subcarrier spacing.

The association relationship includes one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, the quantity M of bits of the first signal or the second sequence that are carried by one OFDM symbol, and the coding and modulation information of the second sequence, ceiling denotes a ceiling function, and L1 denotes an information bit length or transmission bit length of the second sequence.

A position where the second sequence is scrambled by the first sequence is related to one or more of the bit information of the first sequence, the bit information of the second sequence, the wake-up terminal group information carried by the second sequence, and the wake-up indication information carried by the second sequence.

Specifically, the position where the second sequence is scrambled by the first sequence includes one or more of the following:
at least one sequence position having an information bit of 1 in the generation sequence of the second sequence, or a time domain resource position and/or frequency domain resource position to which the at least one sequence position having the information bit of 1 is mapped; wherein the mapped specific bit or time domain resource position and/or frequency domain resource position may be related to the wake-up information carried by the first sequence, or may be based on the implementation (such as the implementation of the network device);
at least one sequence position having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped; wherein the mapped specific bit or time domain resource position and/or frequency domain resource position may be related to the wake-up information carried by the first sequence, or may be based on the implementation (such as the implementation of the network device);
at least one sequence position carrying the same wake-up indication information, the same wake-up terminal information, or the same wake-up terminal group information as that carried by the first sequence and having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position having an information bit of a1+b1×j (information 1 is modulated as a1+b1×j) in the generation sequence of the second sequence, or a time domain resource position and/or frequency domain resource position to which the at least one sequence position having the information bit of a1+b1×j is mapped;
at least one sequence position having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position carrying the same wake-up indication information, the same wake-up terminal information, or the same wake-up terminal group information as that carried by the first sequence and having an information bit of a1+b1×j (information 1 is modulated as a1+b1×j) in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position being associated with or having the same index as a wake-up terminal index or a wake-up terminal group index carried by the first sequence and having an information bit of 1 in a preamble field of the second sequence, or a time domain resource position and/or frequency domain resource position to which the at least one sequence position having the information bit of 1 is mapped;
at least one sequence position being associated with or having the same index as the wake-up terminal index or the wake-up terminal group index carried by the first sequence and having an information bit of a1+b1×j in the preamble field of the second sequence, or a time domain resource position and/or frequency domain resource position to which the at least one sequence position having the information bit of a1+b1×j is mapped;
at least one sequence position having an information bit of a2+b2×j after coding and modulation in the second sequence, or a time domain resource position and/or frequency domain resource position to which the at least one sequence position having the information bit of a2+b2×j is mapped;
wherein a1, b1, a2 and b2 are any real numbers.

Here, "association" can be understood in multiple ways. For example, it can be understood as a correspondence between multiple pieces of information, or it can be understood that one piece of information can be determined through other information.

Transmission bit information of the first signal is related to one or more of the following: the bit information of the second sequence, bit information of a generation sequence of the second sequence, and the bit information of the first sequence.

In embodiments of this disclosure, the first signal is generated in one or more of the following manners:
at least one position having bit information of 0 in the second sequence is mapped to a number T of zeros, wherein T is related to one or more of a length of the first sequence, a bandwidth of the first signal, and a subcarrier spacing, and T is an integer greater than or equal to 1;
at least one position having bit information of 1 in the second sequence is mapped to at least one first sequence;
at least one position having bit information of a1+b1×j or a2+b2×j in the second sequence is mapped to at least one first sequence;
at least one position having bit information of a1+b1×j or a2+b2×j in the second sequence is mapped to at least one product of a1+b1×j and the first sequence ((a1+b1×j)×first sequence) or is mapped to at least one product of a2+b2×j and the first sequence ((a2+b2×j)×first sequence);
wherein a1, b1, a2 and b2 are any real numbers.

The time-frequency resource mapping information of the first signal includes a time-frequency resource mapping manner for the first signal, wherein the time-frequency resource mapping manner includes:
one bit of the first signal is mapped to one RE resource; or
one bit of the first signal is mapped to P consecutive or non-consecutive REs or RBs, wherein P is related to one or more of the following: the quantity of bits M of the first signal or second sequence carried by a single OFDM symbol, the quantity of points of the LS or Discrete Fourier Transform (DFT) of the second sequence, the bandwidth of the first signal, and a subcarrier spacing; and P is an integer greater than or equal to 1.

The coding and modulation methods include:
digital coding methods: Manchester coding, differential coding;
Phase/amplitude modulation methods: binary phase shift keying (BPSK), quadrature phase shift keying (QPSK), least square (LS), discrete Fourier transform (DFT), and other predefined modulation methods (e.g., information 0 is modulated as a1+b1×j; information 1 is modulated as a2+b2×j).

(2) Time domain resource position of the first signal;

(3) Frequency domain resource position information of the first signal.

In embodiments of this disclosure, the first signal includes a first sequence and a second sequence. The first sequence and the second sequence are used for carrying at least one of the following information for a same terminal or terminal group: wake-up indication information, wake-up terminal information, or wake-up terminal group information. the first sequence and the second sequence correspond to different types of waveforms. Therefore, wake-up indication information of different waveforms can be carried by the first signal, which can reduce signal resource overhead.

In some embodiments, based on the above embodiments, the terminal may also obtain the wake-up indication information according to the first signal. Specifically, the terminal may obtain the first sequence, and obtain the wake-up indication information carried by the first sequence and/or the wake-up indication information carried by the second sequence.

When obtaining the first sequence, the terminal can determine the position where the second sequence is scrambled by the first sequence, and obtain the first sequence based on the scrambling position. For the method for determining the scrambling position, reference may be made to the description in the foregoing embodiments. Optionally, the terminal can obtain the first sequence through blind detection.

In embodiments of this disclosure, one or more of the first sequence, the second sequence, the wake-up terminal information, and the wake-up terminal group information are related to one or more of the following information:
cell ID, UE ID, PO index, PF index, subgroup index, terminal group identifier, area ID.

Fig. 2 is a flowchart of a signal processing method according to an embodiment of this disclosure. The method is performed by a network device, as shown in Fig. 2, the method includes the following step:
Step 201: sending first information to a terminal.

The first information is used for receiving a first signal, the first signal including a first sequence and a second sequence, the first sequence and the second sequence being used for carrying at least one of the following information for a same terminal or terminal group: wake-up indication information, wake-up terminal information, wake-up terminal group information, and the first sequence and the second sequence corresponding to different types of waveforms.

Different types of waveforms can take different forms depending on the specific implementation scenario. For example, the different types of waveforms include any two of the following: ASK waveform, FSK waveform, and OFDM waveform.

For the meaning of the first information and the first signal, reference can be made to the description in the foregoing method embodiments.

The first information can be predefined in a technical protocol, or can be notified to the terminal by the network device based on at least one of the following: radio resource control (RRC) signaling, system information block (SIB) X signaling, and downlink data/control signal indication/activation (or deactivation).

In embodiments of this disclosure, the first signal includes a first sequence and a second sequence. the first sequence and the second sequence correspond to different types of waveforms and are used for carrying wake-up indication information of a same terminal or terminal group. Therefore, wake-up indication information of different waveforms can be carried by the first signal, which can reduce signal resource overhead.

Specific implementations of the embodiments of this disclosure are described below with reference to different examples. In the following descriptions, an LP-WUS signal is take as an example of the first signal, and a base station is taken as an example of the network device.

In the following embodiments, a wake-up signal is generated from an ASK/FSK waveform and an OFDM waveform jointly. The two waveforms carry the same wake-up indication information based on time-frequency resource position and/or signal generation information, and are used to wake up at least one LP-WUR.

In the first embodiment of this disclosure, the LP-WUS signal is generated from an OOK-1 signal and K (K≥1) OFDM symbols.

In one example, assuming LP-WUS occupies 7 REs in frequency domain, one LP-WUS can simultaneously instruct two subgroups to wake up or go to sleep. The base station needs to wake up both the subgroups simultaneously, generates a 2-bit OOK-1 [1 1] signal, which is then Manchester coded at 1/2 code rate to obtain a 4-bit OOK-1 transmission sequence [0 1 0 1], and generates a 7-bit OFDM sequence (or two different OFDM sequences can be generated based on the subgroup index). In this case, generation methods of the LP-WUS signal include the following.

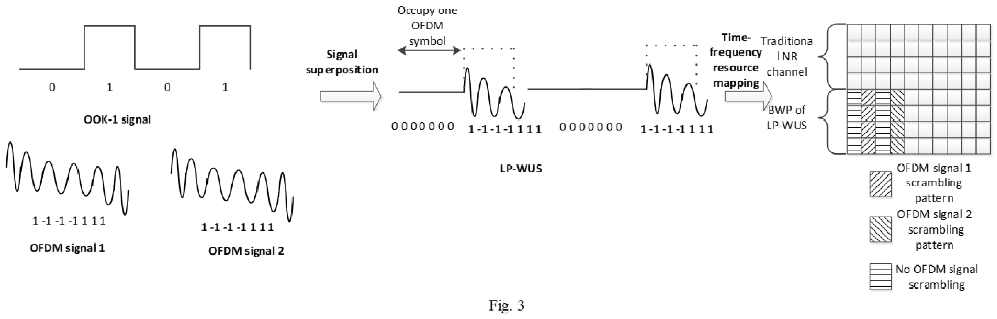

Generation Method 1: Referring to Fig. 3, the WUS transmission sequence is generated from the OOK-1 transmission sequence and the OFDM sequence jointly, and then subjected to time-frequency resource mapping to obtain the final transmission signal. The rule for generating the WUS signal from the OOK-1 transmission sequence and the OFDM sequence includes one or more of the following:
1) each bit position with OOK=0 is expanded into 7 bits of 0;
2) each bit position with OOK=1 is expanded into a 7-bit OFDM sequence carrying the same wake-up subgroup index.

Based on the above rules, a 28-bit LP-WUS transmission sequence can be obtained, which occupies 4 OFDM symbols after time-frequency resource mapping. An OOK receiver determines the OOK-1 transmission bit sequence by detecting the energy of each OFDM symbol. An OFDM receiver determines whether to wake up based on the position of the OFDM reception sequence. For example, if a terminal in subgroup #0 receives the OFDM sequence on the second OFDM symbol, the terminal will wake up; otherwise, the terminal will sleep. Similarly, if a terminal in subgroup #1 receives the OFDM sequence on the fourth OFDM symbol, the terminal will wake up; otherwise, the terminal will sleep.

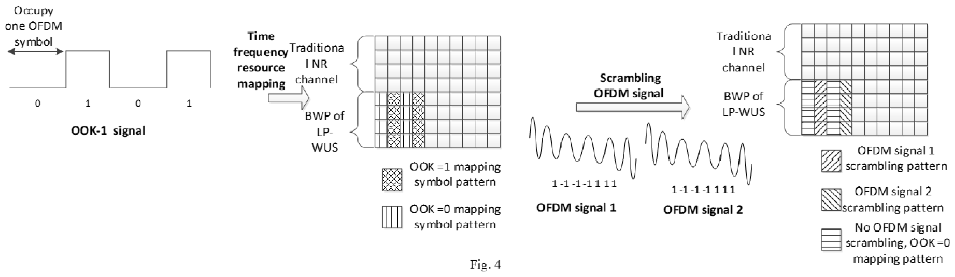

Generation Method 2: Referring to Fig. 4, the OOK-1 transmission sequence is scrambled by the OFDM sequence on specific resources resulting from OOK-1 time-frequency mapping. The rule for scrambling with the OFDM sequence includes one or more of the following:
1) an OFDM signal is not mapped on time-frequency resource position of each bit with OOK=0;
2) A 7-bit OFDM sequence carrying the same wake-up subgroup index is mapped on 7 RE resource positions to which each bit with OOK=1 is mapped.

Based on the above rules, a joint LP-WUS signal with a time domain duration of four OFDM symbols can be obtained. The OOK receiver determines the transmission bit sequence of OOK-1 by detecting the energy of each OFDM symbol. The OFDM receiver determines whether to wake up based on the position of the OFDM reception sequence. For example, if a terminal in subgroup #0 receives the OFDM sequence on the second OFDM symbol, the terminal will wake up; otherwise, the terminal will go to sleep. Similarly, if a terminal in subgroup #1 receives the OFDM sequence on the fourth OFDM symbol, the terminal will wake up; otherwise, the terminal will go to sleep.

In one example, assuming LP-WUS occupies 7 REs in frequency domain, one LP-WUS signal can simultaneously instruct two subgroups to wake-up/sleep. The base station only needs to wake up the terminal in subgroup #0 and put the terminal in subgroup #1 into sleep mode, generates a 2-bit OOK-1 signal [1 0], which is then Manchester coded at 1/2 code rate to obtain a 4-bit OOK-1 transmission sequence [0 1 1 0], and generates a 7-bit OFDM sequence. In this case, the LP-WUS signal generation method includes:

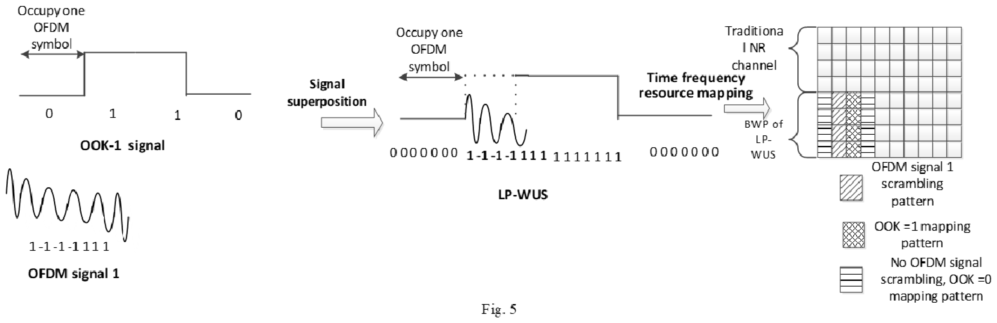

Generation Method 1: As shown in Fig. 5, after the LP-WUS transmission sequence is generated from the OOK-1 transmission sequence and OFDM sequence jointly, the final transmission signal is obtained through time-frequency resource mapping. The rule for generating the WUS signal from the OOK-1 transmission sequence and the OFDM sequence includes one or more of the following:
1) each bit position with OOK=0 is expanded into 7 bits of 0;
2) each bit position with OOK=1 is expanded into a 7-bit OFDM sequence carrying the same wake-up subgroup index.

Based on the above rules, a 28-bit LP-WUS transmission sequence can be obtained, which occupies 4 OFDM symbols after time-frequency resource mapping. An OOK receiver determines the OOK-1 transmission bit sequence by detecting the energy of each OFDM symbol. An OFDM receiver determines whether to wake up based on the position of the OFDM reception sequence. For example, if a terminal in subgroup #0 receives the OFDM sequence on the second OFDM symbol, the terminal will wake up; otherwise, the terminal will remain asleep. Similarly, if the terminal in subgroup #1 does not receive the OFDM sequence on the fourth OFDM symbol, the terminal will remain asleep.

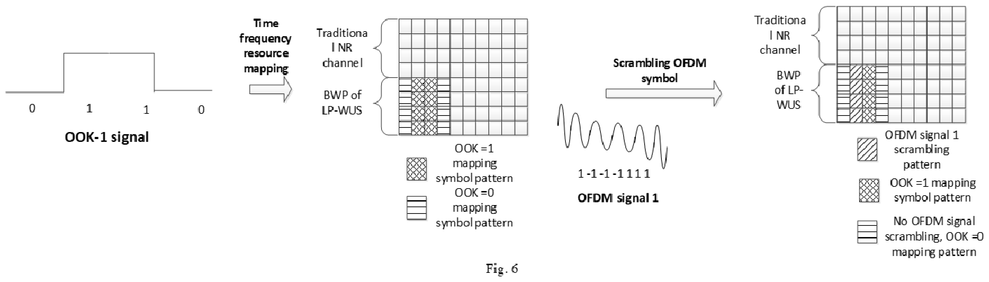

Generation Method 2: As shown in Fig. 6, the OOK-1 transmission sequence is scrambled by the OFDM sequence on specific resources resulting from OOK-1 time-frequency mapping. The rule for scrambling with the OFDM sequence includes one or more of the following:
1) an OFDM signal is not mapped on time-frequency resource position of each bit with OOK=0;
2) A 7-bit OFDM sequence carrying the same wake-up subgroup index and for waking up subgroup #0 is mapped on 7 RE resource positions to which each bit with OOK=1 is mapped.

Based on the above rules, a joint LP-WUS signal with a time domain duration of four OFDM symbols can be obtained. An OOK receiver determines the OOK-1 transmission bit sequence by detecting the energy of each OFDM symbol. An OFDM receiver determines whether to wake up based on the position of the OFDM reception sequence. For example, if the terminal in subgroup #0 receives the OFDM sequence on the second OFDM symbol, the terminal wakes up; otherwise, the terminal remains asleep. Similarly, if the terminal in subgroup #1 does not receive the OFDM sequence on the fourth OFDM symbol, the terminal remains asleep.

In this embodiment, the specific process is as follows:
S1. The base station sends configuration information for the LP-WUS signal generated jointly from the ASK/FSK signal and K (K>=1) OFDM sequence signals to at least one terminal, so that the terminal determines reception information of the LP-WUS signal. The base station then sends the LP-WUS signal to wake up at least one LP-WUR based on the requirements of the communication with the terminal.

ASK/FSK signals are dedicated reception signals for radio frequency or baseband receivers. ASK signal carries different information based on different modulation amplitudes of the signal, and can include OOK signals (modulation amplitudes are only 0 and 1); FSK signal carries different information based on different carrier frequencies.

The configuration information for LP-WUS includes at least one of the following:
(1) generation information of LP-WUS signal, including generation information of OOK signal and generation information of OFDM signal:
   generation sequence information of the OOK signal;
   waveform information of the OOK signal: in this embodiment, the OOK waveform is OOK-1;
   the quantity M of bits of the LP-WUS/OOK signal carried by one OFDM symbol: OOK-1 corresponds to M=1;
   structural information of the OOK signal;
   structural information of the OFDM signal;
   generation information of the OFDM signal;
   coding and modulation information of the OFDM signal;
   information on the manner of scrambling OOK signal with the OFDM signal;
   time-frequency resource mapping information of the OFDM signal;
(2) information on time and frequency resource positions for LP-WUS signal transmission.

The coding and modulation methods include:
(1) digital coding methods: Manchester coding, differential coding;
(2) phase/amplitude modulation methods: binary phase shift keying (BPSK), quadrature phase shift keying (QPSK), least square (LS), discrete Fourier transform (DFT), and other predefined modulation methods (e.g., information 0 is modulated as a1+b1×j; information 1 is modulated as a2+b2×j);
the quantity of OFDM signals for scrambling the OOK signal can be determined according to at least one of the following methods: predefined in a technical protocol, configured by a base station, or determined dynamically by the base station based on the quantity of the to-be-woken terminals (terminal groups) dedicated to OFDM signals.

The configuration information for LP-WUS signal can be notified to the terminal based on at least one of the following methods: predefined in a technical protocol, radio resource control (RRC) signaling, system information block (SIB) X signaling, and downlink data/control signal indication/activation (or deactivation).

S2. The terminal obtains the configuration information for LP-WUS signal, and determines the positions of the time-frequency resources for receiving the LP-WUS and/or the sequence information of the LP-WUS signal generation.

The LP-WUS signal is generated jointly from one OOK signal and K OFDM signals (for simultaneously waking up the terminal groups associated with the K OFDM sequences and the terminal group associated with the OOK signal), and the generation information includes information of the OOK signal and/or information of the OFDM signals.

The generation sequence of the OOK signal is related to the structure of the OOK signal and the coding and modulation information of the OOK signal. The signal structure may include at least one of the following:
preamble field: for determining a starting reception position for a wake-up indication information field and/or time-frequency synchronization information; wherein the preamble field can be a UE-group specific or cell-specific sequence or signal;
wake-up indication information field: indicates that at least one terminal (group) is to be woken up; the wake-up indication information field can indicate wake-up information in one of the following ways:
   (1) bitmap: each bit information field corresponds to one terminal/one terminal group, and the bitmap simultaneously instructs multiple terminals (terminal groups) to wake up, 0 denotes sleep, 1 denotes wake up;
   (2) codepoint: this information field includes multiple information blocks, and each information block carries index information of one terminal to be woken up or a group of terminals to be woken up;
   (3) multi-level sequence indication method: at least one level of wake-up indication information is generated based on bitmap, codepoint, and specific sequence, wherein the specific sequence can be generated in at least one sequence format among m sequence, gold sequence, Hardmard sequence, ZC sequence, and PN sequence; the indication level can include one or more of PO index, PF index, subgroup index, UE ID, cell ID, UE (group) ID, and area ID;
cyclic redundancy check (CRC) field: the CRC field has a fixed formula-based verification relationship with the wake-up indication information field, and is used to determine whether the wake-up indication information field has been received correctly. The formula can be defined in a technical protocol.

The coding and modulation methods include:
1) digital coding methods: Manchester coding, differential coding, or other digital coding methods;
2) phase/amplitude modulation methods: BPSK, QPSK, LS, DFT, and other predefined modulation methods (e.g., information 1 is modulated as a1+b1×j; information 0 is modulated as a2+b2×j).

The OFDM signal can be an orthogonal sequence or other random sequence. The sequence has an association relationship with at least one of cell ID, UE ID, PO index, PF index, subgroup index, UE ID, cell ID, UE (group) ID, area ID, and modulation scheme. This association relationship can be predefined in a protocol or calculated based on a formula. The formula-based calculation can include at least one of the following.
1) The index of the OFDM sequence in the OFDM sequence set is determined by X. X can be any one of the following: cell ID, UE ID, PO index, PF index, subgroup index, UE (group) ID, or area ID. The specific determination relationship can be:
   the sequence in the OFDM sequence set may include at least one orthogonal sequence, which may be a Hardmard sequence, a ZC sequence, or other sequence defined in a protocol;
   index of the sequence in the OFDM sequence set is X mod(P), where P is the total quantity of available OFDM sequences, and P≥1;
   index of the sequence in the OFDM sequence set is X;
   index of the sequence in the OFDM sequence set is f (X), where f (X) is a function related to X, the function is defined in a protocol.

Specifically, if the sequence set is defined by a table in a protocol, the index of the first sequence (OFDM sequence) in the set is the row/column index in the table, as shown in Table 1 below:

**Table 1: OFDM Sequence Enumeration Table**

| Index | sequence |
|---|---|
| 0 | X₀ |
| 1 | X₁ |
| 2 | X₂ |
| ... | ... |
| P-1 | X _{P-1} |

2) The OFDM signal is generated by cyclic shifting a base sequence by Y bits. The value of Y is related to one or more of the following: cell ID, UE ID, PO index, PF index, subgroup index, UE (group) ID, and area ID:
the base sequence can be one of the following: gold sequence, ZC sequence, m sequence, and other predefined sequence;
wherein Y = Y1 mod(Q), Y1 can be one or more of cell ID, UE ID, PO index, PF index, subgroup index, UE (group) ID, and area ID; Q is the total quantity of cyclic shift values, which can be defined in a protocol or obtained from information configured by a base station;
wherein Y = Y1, Y1 can be one or more of cell ID, UE ID, PO index, PF index, subgroup index, UE (group) ID, and area ID;
wherein Y = f(Y1), f(Y1) is a function related to Y1, and the function is defined in a protocol.

3) The OFDM signal is generated from a third sequence and an initial value of the third sequence. The third sequence can be any one of the following: gold sequence, m sequence, or ZC sequence. The initial value _{c_init} of the third sequence is related to one or more of the following: cell ID, UE ID, PO index, PF index, subgroup index, UE (group) ID, area ID, time-frequency resource position information, and information configured by a base station.

The formula for determining the initial value of the third sequence can satisfy one of the following: ${c}_{init} = \left(A\times \left(f\left(B\right)\times f\left(C\right)+D\right)\right) mod \left(F\right) ;$ ${c}_{init} = \left(A\times \left(f\left(B\right)\times f\left(C\right)+C\right)\right) mod \left(F\right) ;$ ${c}_{init} = \left(A\times \left(f\left(B\right)\times f\left(C\right)+C+D\right)\right) mod \left(F\right) ;$ ${c}_{init} = \left(A\times \left(f\left(B\right)\times f\left(C\right)+D+E\right)\right) mod \left(F\right) ;$ where A and F can be fixed values defined in a protocol or values configured by a base station, e.g., A=a^{b}, F=c^{d}, where a, b, c, d can be determined based on the protocol or configuration parameters; f(B) is a function related to the position parameter B of the time-frequency resources where the signal is located, B can include one or more of: the radio frame number, the number of the slot within the radio frame, the quantity of OFDM symbols within the slot, the number of the OFDM symbol within the slot, and a subcarrier spacing. f (C) and f (D) are parameters pre-configured by the base station, which can be related to the cell ID or be a fixed value.

For example: ${c}_{init} = \left({2}^{b}\times \left(\left(14\times n+1+1\right)\times \left(2\times {n}_{ID}+1\right)+{n}_{\left.ID\right)}\right){mod 2}^{c}.\right.$

In the above formula, b and c can be predefined in a protocol or configured on the base station side. n is related to the time-frequency resource position of the signal. For example, n is the sequence of the first OFDM symbol occupied by the signal in the slot. n_{ID} can be preconfigure by a base station, and is at least one of the following: UE ID, PO index, PF index, subgroup ID, cell ID, UE (group) ID, and area ID.

4) The OFDM signal can be obtained by modulating the signal generated by one of the above three generation methods. The modulation method includes any one of the following: BPSK, QPSK, 64 quadrature amplitude modulation (QAM), and other multi-level modulation technique.

LP-WUS is composed of one OOK signal and K OFDM signals (carrying wake-up information for the terminal groups associated with the K OFDM signals simultaneously). The generation information of LP-WUS includes at least one of the following: the length of the LP-WUS signal, the specific bit positions where the OOK signal is scrambled by the OFDM signals, the bit information transmitted by the LP-WUS, and the time-frequency resource mapping relationship of the LP-WUS signal.

41) The signal length L of LP-WUS is related to at least one of the following: the transmission sequence length L1 of the OOK signal, the coding and modulation information of the OOK signal (e.g., coding rate, modulation order), the generation sequence length L0 of the OOK signal, the length L2 of the OFDM signal, the frequency domain bandwidth W occupied by LP-WUS (the resource granularity can be RE, or RB), and the quantity M of bits of LP-WUS/OOK signal carried by a single OFDM symbol at a single subcarrier spacing. The specific relationship can be one of the following: $L = L 1 \times A ;$ $L = L 0 \times A ;$ $L = L 1 \times A + B ;$ $L = L 0 \times A + C ;$ wherein, A, B and C are related to at least one of the following: the quantity of REs/RBs occupied by LP-WUS in frequency domain, the bandwidth, the subcarrier spacing, the length of the OOK sequence, the quantity M of bits of the LP-WUS/OOK signal carried by a single OFDM symbol, and the coding and modulation information of the OOK signal (e.g., coding rate, modulation order).

For example:
the OOK signal format is OOK-1, M=1, and the bandwidth occupied by LP-WUR is W RBs. Then, the length of the LP-WUS signal generated from L1 bits of OOK-1 signal and L2 bits of OFDM signal is L = L1×W×12 bits; (if the bandwidth is W REs, L = L1×W bits).

42) The scrambling position of the OFDM signal in the LP-WUS is related to at least one of the following: the bit information of the OOK signal, the bit information of the OFDM signal, and the information field of the OOK signal. The specific scrambling position can be the following.

421) any sequence position (or mapped time-frequency resource) having an information bit of 1 in the wake-up information field of the OOK signal.

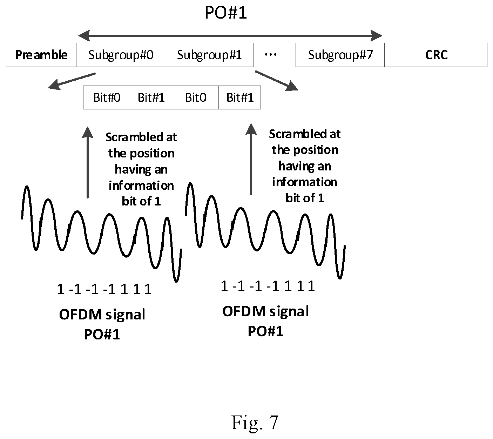

422) The sequence position (or mapped time-frequency resource) carrying the same information as the first sequence and having an information bit of 1 in the wake-up information field of the OOK signal, as shown in Fig. 7:
the OOK signal is composed of a preamble field, a wake-up indication field, and a CRC field. The wake-up indication field uses a bitmap to simultaneously indicate whether eight terminal groups are to be woken or to remain asleep. For example, 11000000 indicates that terminal groups 0 and 1 are to be woken, while terminal groups 2-7 are to remain asleep. Meanwhile, OFDM signals associated with wake up of groups 0 and 1 are generated (the generation method of the OFDM signals is detailed in the description related to the OFDM sequence generation method; the two sequences can be identical, but the mapped time-frequency resource positions are different). These two OFDM signals are scrambled into time-frequency resource positions of the subgroup#0 and subgroup#1 information fields of the OOK wake-up information field having generated information or modulated information of 1, respectively.

423) At least one sequence position (or mapped time-frequency resource) having a generation sequence information bit of 1 in the generation sequence of the OOK signal.

424) At least one sequence position (or mapped time-frequency resource) having a coded and modulated information bit of a1+b1×j in the OOK signal.

425) At least one sequence position (or mapped time-frequency resource) being associated with the wake-up terminal group information index carried by the first sequence and having an information bit of 1 in the preamble field of the OOK sequence.

426) At least one sequence position (or mapped time-frequency resource) being associated with the wake-up terminal group information index carried by the first sequence and having an information bit of a1+b1×j in the preamble field of the OOK sequence.

For example:
The LP-WUS signal is composed of an OOK sequence and at least one OFDM sequence. The OOK signal includes a preamble field, a wake-up indication field, and a CRC field. K1 bit positions in the preamble information field are set to 1 (or modulated to a1+b1×j). The OFDM signal is generated from the subgroup index of the wake-up terminal group. The specific generation method is detailed in the description of the aforementioned embodiments. If the LP-WUS signal indicates wake-up of subgroup #0 in the wake-up terminal groups of subgroup #0 to subgroup #7 at one PO, an OOK signal is generated, wherein information at the position of wake-up information field subgroup #0 is 1 (or modulated to a1+b1×j), and information at the remaining wake-up information fields are 0 (or modulated to a2+b2×j). Then, an OFDM signal associated with wake up of the group 0 is generated. The OFDM signal is scrambled onto the first time-frequency resource position having information of 1 or modulated information of a1+b1×j in the preamble field of the OOK wake-up information field.

5) The LP -WUS transmission bit information is related to at least one of the bit information of the OOK sequence or the bit information of the OFDM sequence. The LP-WUS generation rule includes one or more of the following:
51) at least one position having bit information of 0 in the OOK sequence is mapped to T zeros, where T is related to at least one of the following: the length N2 of the OFDM sequence, the bandwidth of the LP-WUS signal, and a subcarrier spacing;
52) at least one position having bit information of 1 in the OOK sequence is mapped to at least one OFDM sequence;
53) at least one position having bit information of a1+b1×j in the OOK sequence is mapped to at least one OFDM sequence;
54) at least one position having bit information of a1+b1×j in the OOK sequence is mapped to at least one (a1+b1×j)×OFDM sequence.

For example:
when the waveform type of the sequence is OOK-1 (M=1), the LP-WUS occupies L REs in the time domain (excluding guard band). The specific generation relationship between the N3-bit LP-WUS generation sequence c(n), the N1-bit OOK sequence, and the N2-bit OFDM sequence can be as follows: ${a}_{N 1} = \left[{a}_{0},{a}_{1}.…{a}_{N 1}\right]$ ${b}_{N 2} = \left[{b}_{0},{b}_{1}.…{b}_{N 2}\right]$ ${c}_{i} = \left\{\begin{matrix}A , if {a}_{\left⌊\frac{i}{L}\right⌋} = = A ; \\ {b}_{\left(P\times L\right) mod N 2} * B , if {a}_{\left⌊\frac{i}{L}\right⌋} = = B ;\end{matrix}\right. i = 0 ∼ N 3 .$

6) The time-frequency resource mapping manner for the LP-WUS signal can be:
manner 1: each bit of LP-WUS signal is mapped to one RE resource;
manner 2: each bit of LP-WUS signal is mapped to P consecutive or non-consecutive REs/RBs, where P is related to at least one of the following: the quantity of bits of the OOK/LP-WUS signal carried by a single OFDM symbol, the quantity of points of the LS/DFT of the OOK sequence, the bandwidth of the LP-WUS signal, and a subcarrier spacing.

S3. The LP-WUR determines the type of wake-up signal specific to itself based on its capabilities, for receiving wake-up signals and obtaining wake-up indication information.

The capabilities of LP-WUR include at least one of the following: an RF receiver based on OOK signal reception (with OOK signal as the dedicated reception signal), a baseband receiver based on OOK signal reception (with OOK signal as the dedicated reception signal), and an OFDM receiver (with OFDM signal as the dedicated reception signal).

In a second embodiment of this disclosure, the LP-WUS signal is generated from an OOK-4 signal and K OFDM symbols.

In one example, assuming that the LP-WUS occupies 7 REs in frequency domain, one LP-WUS can simultaneously instruct two subgroups to wake up or go to sleep. The base station needs to wake up these two subgroups simultaneously, generates a 2-bit OOK-4 [1 1] signal, obtains a 4-bit OOK-4 coded sequence [0 1 0 1] after Manchester coding at 1/2 code rate, and generates a 7-bit OFDM sequence (two different OFDM sequences can also be generated according to the subgroup index).

After the WUS transmission sequence is generated from the OOK-4 coded sequence and the OFDM sequence, the final transmission signal is obtained through time-frequency resource mapping. The rule for generating the time domain WUS signal from the OOK-4 transmission sequence and the OFDM sequence includes one or more of the following:
1) each bit position with OOK=0 is expanded into 7 bits of 0;
2) each bit position with OOK=1 is expanded into a 7-bit OFDM sequence carrying the same wake-up subgroup index.

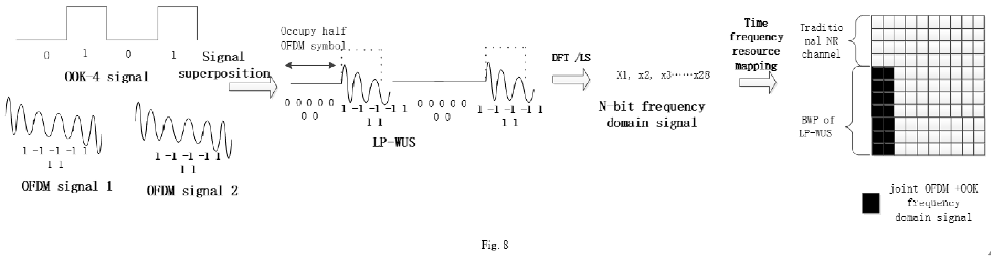

As shown in Fig. 8, assuming one OFDM signal can carry 2 bits of OOK-4 information (i.e., M=2), for a 28-bit time domain signal generated based on the above rules, the first 14 bits (corresponding to 2-bit OOK-4 coded information) are processed by DFT/LS to obtain a 7-bit frequency domain signal, which is mapped to the 7 RE positions in the first OFDM symbol of LP-WUS; similarly, the last 14 bits (corresponding to 2-bit OOK-4 coded information) are processed by DFT/LS to obtain a 7-bit frequency domain signal, which is mapped to the 7 RE positions in the second OFDM symbol of LP-WUS. The base station generates a time domain LP-WUS signal by performing IFFT modulation on the time-frequency resource blocks. Time domain transmission sequence of one OFDM symbol carries 2 bits of OOK-4 information, where the time domain position corresponding to bit 1 is scrambled with the OFDM sequence for waking up the same subgroup. That is, the first OFDM symbol carries the wake-up information for the OOK receiver and OFDM receiver in subgroup #0, and the second OFDM symbol carries the wake-up information for the OOK receiver and OFDM receiver in subgroup #1.

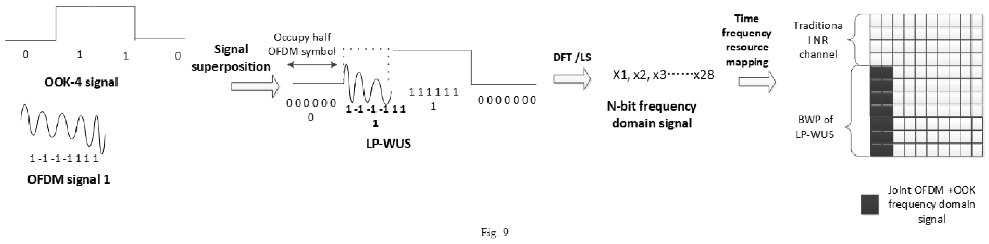

In one example, as shown in Fig. 9, assuming that LP-WUS occupies 7 REs in frequency domain, one LP-WUS can simultaneously instruct two subgroups to wake up or go to sleep. The base station only needs to wake up subgroup #0, generates a 2-bit OOK-4 signal [1 0], obtains a 4-bit OOK-4 coded sequence [0 1 1 0] after Manchester coding at 1/2 code rate, and generates one 7-bit OFDM sequence. The method for WUS generation and reception is the same as in the previous example.

In an embodiment of this disclosure, the specific processing procedure is as follows.

S1. The base station sends configuration information (i.e., first configuration information) for the LP-WUS signal generated from the OOK signal and K OFDM signals to at least one terminal, so that the terminal determines reception information of the LP-WUS signal. The base station then sends the LP-WUS signal to wake up at least one LP-WUR based on the requirements of the communication with the terminal.

The configuration information for LP-WUS is the same as that described in the previous embodiments, except for the following differences:
waveform information of the OOK signal: OOK-4;
the bit information M of the OOK signal carried by a single OFDM symbol, in this embodiment M>=1;
the guard band for the OOK signal in a single OFDM symbol.

The configuration information for LP-WUS signal can be notified to the terminal in at least one of the following ways: predefined in a technical protocol, RRC signaling, SIB X signaling, downlink data or control signal indication or activation (or deactivation).

S2. The terminal obtains the configuration information for LP-WUS signal, determines the time-frequency resource positions for receiving LP-WUS and/or the sequence information of the LP-WUS signal generation. The LP-WUS signal is jointly generated from one OOK signal and one OFDM signal, and the generation information includes the information of the OOK signal and the information of the OFDM signal.

The generation sequence of the OOK signal is related to the structure of the OOK signal, the DFT/LS size N' (quantity of points N' of DFT/LS), and the coding and modulation method:
for the OOK signal structure and coding method, reference can be made to the description of the foregoing embodiments;
the OOK signal can be obtained by performing a DFT/LS transform on the generation sequence followed by coding and modulation, or the OOK signal can be obtained by performing coding and modulation on the generation sequence followed by a DFT/LS transform. Particularly, if the OOK signal is not coded and modulated, the OOK signal is obtained by performing a DFT/LS transform on the generation sequence.

For the sequence generation method for the OFDM signal, reference can be made to the description in the foregoing embodiments.

The LP-WUS is composed of one OOK signal and K OFDM signals. The generation information of the LP-WUS includes at least one of the following: the length of the LP-WUS signal, the specific bit positions where the OOK signal is scrambled by the OFDM signals, the bit information transmitted by the LP-WUS, and the time-frequency resource mapping relationship of the LP-WUS signal.
1) The LP-WUS signal length L is related to at least one of the following: the OOK signal length L1, the DFT/LS size of the OOK signal, the generation sequence length L0 of the OOK signal, the coding and modulation information of the OOK signal (e.g., coding rate, modulation order), the OFDM signal length L2, the frequency domain bandwidth W occupied by the LP-WUS (the resource granularity can be RE or RB), the quantity of bits M of the LP-WUS/OOK signal carried by a single OFDM symbol, and a subcarrier spacing. The specific relationship can be one of the following: $L = L 1 \times A ;$ $L = L 0 \times A ;$ $L = L 1 \times A ;$ $L = L 0 \times A ;$ $L = L 1 \times A + B ;$ $L = L 0 \times A + C ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C .$

A, B and C are related to at least one of the following: the quantity of REs/RBs occupied by LP-WUS in frequency domain, the bandwidth, the subcarrier spacing, the bit length of the OFDM signal, the quantity of bits M of the LP-WUS/OOK signal carried by a single OFDM symbol, and the coding and modulation information of the OOK signal (e.g., coding rate, modulation order).

For example:
the OOK signal format is OOK-4, M=2, and the bandwidth occupied by LP-WUR is W RBs. Then, the OOK-4 signal with a generation sequence of L0 bits is Manchester coded at 1/2 code rate and scrambled with the OFDM signal of L2 bits, to generate the LP-WUS signal with a length of L= ceiling (W×12/M)×L0×2= ceiling (W×6)×L0×2 bits; (if the bandwidth is W REs, L= ceiling (W/2)×L0×2 bits).

In LP-WUS, the scrambling position of the OFDM signal is related to at least one of the following: the bit information of the OOK transmission sequence (the sequence resulting from coding and modulation), the OOK signal generation sequence (the sequence before coding and modulation), the OFDM signal bit information, and the information field of the second sequence. The specific scrambling position can be at least one of the following:
at least one sequence position (or mapped time-frequency resource) in the wake-up information field of the OOK signal transmission sequence that carries the same information as the OFDM sequence and has an information bit of 1;
at least one sequence position (or mapped time-frequency resource) in the wake-up information field of the OOK signal generation sequence that has an information bit of 1;
at least one sequence position (or mapped time-frequency resource) in the wake-up information field of the OOK signal generation sequence after DFT/LS transformation (or after truncation if there is a truncation operation) that carries the same information as the OFDM sequence and has an information bit of 1;
at least one sequence position (or mapped time-frequency resource) in the wake-up information field of the OOK signal generation sequence after DFT/LS transformation (or after truncation if there is a truncation operation) that has an information bit of 1;
at least one sequence position (or mapped time-frequency resource) in the preamble field of the OOK sequence that is associated with the wake-up terminal group information index carried by the OFDM sequence and has an information bit of 1;
at least one sequence position (or mapped time-frequency resource) in the preamble field of the OOK sequence that is associated with the wake-up terminal group information index carried by the OFDM sequence and has an information bit of a1+b1×j;
at least one sequence position (or mapped time-frequency resource) in the preamble field of the OOK sequence after DFT/LS transformation (or after truncation if there is a truncation operation) that is associated with the wake-up terminal group information index carried by the OFDM sequence and has an information bit of 1;
at least one sequence position (or mapped time-frequency resource) in the preamble field of the OOK sequence after DFT/LS transformation (or after truncation if there is a truncation operation) that is associated with the wake-up terminal group information index carried by the OFDM sequence and has an information bit of (a1+b1×j).

The transmission bit information of LP-WUS is related to at least one of the following: the bit information of the OOK sequence, the bit information of the OOK signal generation sequence, and the bit information of the OFDM sequence. The rule for generating LP-WUS includes at least one of the following:
at least one position having bit information of 0 in the transmission sequence of the OOK signal is mapped to T zeros, where T is related to at least one of the following: the length N₂ of the OFDM sequence, the bandwidth of the LP-WUS signal, or a subcarrier spacing;
at least one position having bit information of 1 in the transmission sequence of the OOK signal is mapped to at least one OFDM sequence;
at least one position having bit information of a1+b1×j in the transmission sequence of the OOK signal is mapped to at least one OFDM sequence;
at least one position having bit information of a1+b1×j in the transmission sequence of the OOK signal is mapped to at least one (a2+b2×j)×first sequence;
at least one position having bit information of 0 in the generation sequence of the OOK signal is mapped to T zeros, where T is related to at least one of the following: the length N₂ of the OFDM sequence, the bandwidth of the LP-WUS signal, or a subcarrier spacing;
at least one sequence position having bit information of 1 in the generation sequence of the OOK signal (or after DFT/LS transformation, or after truncation if there is a truncation operation) or the time domain resource position and/or frequency domain resource position to which the sequence position is mapped is mapped to at least one OFDM sequence;
at least one sequence position having bit information of a1+b1×j in the generation sequence of the OOK signal (or after DFT/LS transformation, or after truncation if there is a truncation operation) or the time domain resource position and/or frequency domain resource position to which the sequence position is mapped is mapped to at least one OFDM sequence;
at least one sequence position having bit information of a1+b1×j in the generation sequence of the OOK signal (or after DFT/LS transformation, or after truncation if there is a truncation operation) or the time domain resource position and/or frequency domain resource position to which the sequence position is mapped is mapped to at least one (a1+b1×j)×first sequence.

For example:
when the waveform type of the OOK sequence is OOK-4 (M>1), the LP-WUS occupies L REs in the time domain (excluding guard band). The specific relationship between the LP-WUS generation sequence c(n), the N1-bit OOK sequence, and the N2-bit OFDM sequence can be: ${a}_{N 1} = \left[{a}_{0},{a}_{1}.…{a}_{N 1}\right]$ ${b}_{N 2} = \left[{b}_{0},{b}_{1}.…{b}_{N 2}\right]$ ${c}_{i} = \left\{\begin{matrix}A , if {a}_{\left⌊\frac{i}{L}\right⌋} = = A ; \\ {b}_{\left(P\times L\times M\right) mod N 2} * B , if {a}_{\left⌊\frac{i}{L}\right⌋} = = B ;\end{matrix}\right. i = 0 ∼ N 2 .$

S3. The LP-WUR determines the type of wake-up signal specific to itself based on its capabilities, for receiving wake-up signals and obtaining wake-up indication information. The capabilities of the LP-WUR device include at least one of the following: an RF receiver based on OOK signal reception (with OOK signal as its dedicated reception signal), a baseband receiver based on OOK signal reception (with OOK signal as its dedicated reception signal), or an OFDM receiver (with OFDM signal as its dedicated reception signal).

In a third embodiment of this disclosure, the LP-WUS signal is generated from one OOK-2 signal and K OFDM signals.

In one example, assuming that LP-WUS occupies 7 REs in frequency domain, one OFDM symbol carries a 2-bit OOK-2 signal, and one bit of OOK-2 signal occupies 3 REs (the guard band between two bits is 1 RE); one LP-WUS can simultaneously instruct two subgroups to wake up or sleep. The base station needs to wake up these two subgroups simultaneously, generates a 2-bit OOK-2 [1 1] signal, obtains a 4-bit OOK-2 transmission sequence [0 1 0 1] after Manchester coding at 1/2 code rate, and generates one 3-bit OFDM sequence (two different OFDM sequences can also be generated according to the subgroup index).

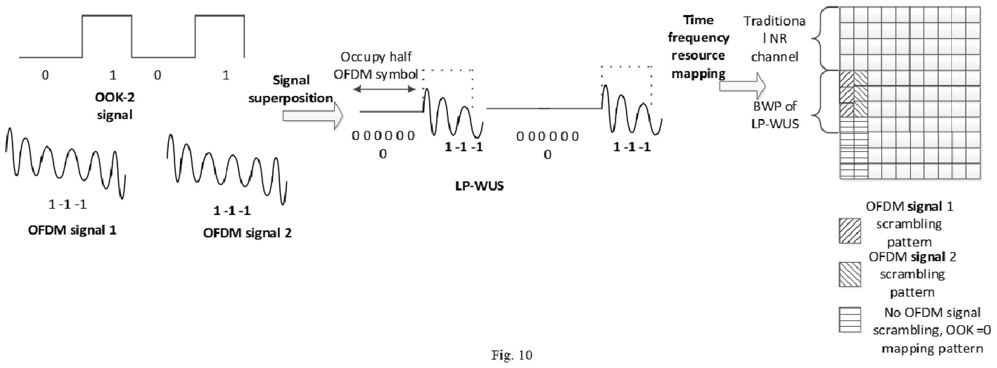

Generation Method 1: As shown in Fig. 10, after the WUS transmission sequence is generated from the OOK-2 transmission sequence and the OFDM sequences jointly, the final transmission signal is obtained through time-frequency resource mapping. The rule for generating the WUS signal from the OOK-1 transmission sequence and the OFDM sequence includes one or more of the following:
1) each bit position with OOK=0 is expanded into 3 bits of 0;
2) each bit position with OOK=1 is expanded into a 3-bit OFDM sequence carrying the same wake-up subgroup index.

Based on the above rules, a 12-bit WUS transmission sequence can be obtained. Six bits are modulated on one OFDM signal to jointly generate the LP-WUS signal information. The LP-WUS signal occupies two OFDM symbols. An OOK receiver determines the OOK-2 transmission bit sequence by detecting the energy of each half OFDM symbol. The OFDM receiver determines whether to wake up based on the position of the OFDM reception sequence. For example, if the terminal in subgroup #0 receives the OFDM sequence on the first OFDM symbol, the terminal wakes up; otherwise, the terminal goes to sleep. Similarly, if the terminal in subgroup #1 receives the OFDM sequence on the second OFDM symbol, the terminal wakes up; otherwise, the terminal goes to sleep.

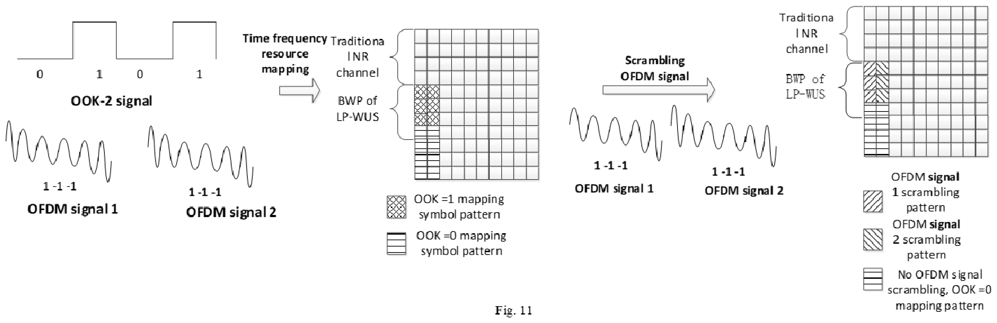

Generation Method 2: As shown in Fig. 11, the OFDM sequence is scrambled on specific resources after OOK-2 time-frequency mapping. The rule for scrambling with the OFDM sequence includes one or more of the following:
1) an OFDM signal is not mapped on time-frequency resource position of each bit with OOK=0;
2) each bit with OOK=1 is mapped to 3 RE resource positions in one OFDM symbol, and a 3-bit OFDM sequence associated with the OOK bit position and having the same subgroup index is modulated on the 3 REs.

Based on the above rules, a joint LP-WUS signal with a time domain duration of 2 OFDM symbols can be obtained. The OOK receiver determines the transmission bit sequence of OOK-2 by detecting the energy of each half OFDM symbol. The OFDM receiver determines whether to wake up based on the position of the OFDM reception sequence. For example, the terminal in subgroup #0 wakes up if the terminal receives the OFDM sequence on the first OFDM symbol, otherwise the terminal goes to sleep. Similarly, the terminal in subgroup #1 wakes up if the terminal receives the OFDM sequence on the second OFDM symbol, otherwise the terminal goes to sleep.

In one example, assuming that LP-WUS occupies 7 REs in frequency domain, one OFDM symbol carries a 2-bit OOK-2 signal, and one bit of OOK-2 signal occupies 3 REs (the guard band between two bits is 1 RE); one LP-WUS can simultaneously instruct two subgroups to wake up or sleep. The base station only wakes up subgroup #0 and not subgroup #1, generates a 2-bit OOK-2 signal [1 0], obtains a 4-bit OOK-2 transmission sequence [0 1 1 0] after Manchester coding at 1/2 code rate, and generates one 3-bit OFDM sequence.

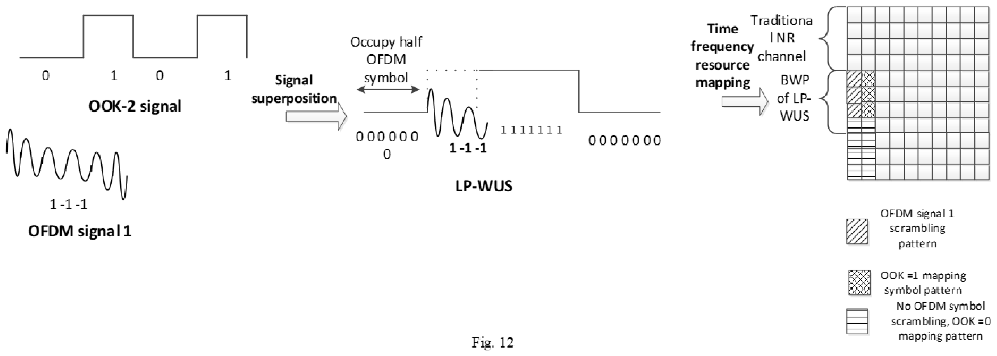

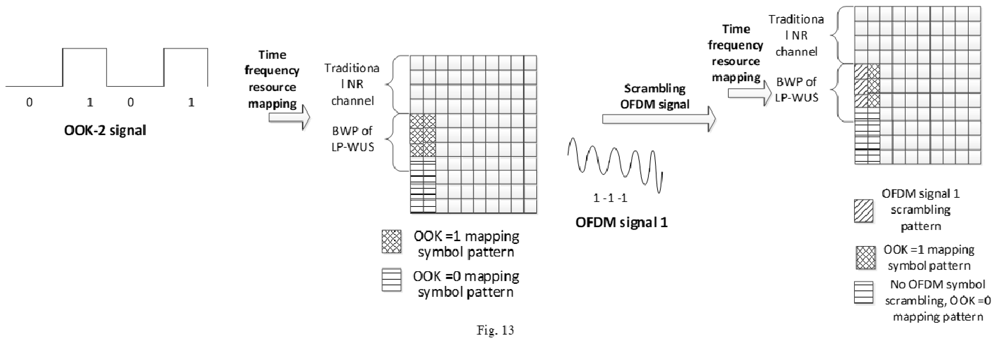

The method for jointly generating WUS (Figs. 12 and 13) is the same as the first and second methods described in the first embodiment above; the method for receiving signals by the OOK receiver and OFDM receiver and the method for determining whether to wake up are the same as those described in the first embodiment above.

In this embodiment, the specific implementation process includes the following.

S1. The base station sends configuration information (the aforementioned first configuration information) for the LP-WUS signal jointly generated from the OOK signal and OFDM signal to at least one terminal, so that the terminal determines reception information of the LP-WUS signal. The base station then sends the LP-WUS signal to wake up at least one LP-WUR based on the requirements of the communication with the terminal.

The configuration information for LP-WUS includes, in addition to the LP-WUS configuration information in the second embodiment, the quantity of OFDM signals for scrambling the OOK signal. The quantity of OFDM signals for scrambling the OOK signal can be determined by at least one of the following methods: predefined in a technical protocol, configured by a base station, or determined dynamically by the base station based on the quantity of the to-be-woken terminals (terminal groups) dedicated to OFDM signals.

The configuration information for LP-WUS signal can be notified to the terminal in at least one of the following ways: predefined in a technical protocol, RRC signaling, SIB X signaling, downlink data or downlink control signal indication or activation (or deactivation).

S2. The terminal obtains the configuration information for LP-WUS signal, determines the time-frequency resource positions for receiving LP-WUS and/or the sequence information of the LP-WUS signal generation. The LP-WUS signal is jointly generated from one OOK signal and one OFDM signal, and the generation information includes the information of the OOK signal and the information of the OFDM signal. For the generation sequence of the OOK signal and the sequence generation method of the OFDM signal, reference can be made to the description in the second embodiment above.

The LP-WUS is composed of an OOK signal and at least one OFDM signal. The generation information of the LP-WUS includes at least one of the following: the length of the LP-WUS signal, the specific bit positions where the OOK signal is scrambled by the OFDM signals, the bit information transmitted by the LP-WUS, the time-frequency resource mapping relationship of the LP-WUS signal, or the quantity of OFDM signals for scrambling the OOK signal.

For the method for determining the signal length of LP-WUS, reference can be made to the description of the second embodiment above.

For the method for determining the scrambling position of OFDM signal in LP-WUS, reference can be made to the description in the second embodiment above.

The transmission bit information of LP -WUS is related to at least one of the following: the bit information of the OOK sequence, the bit information of the OOK signal generation sequence, and the bit information of at least one OFDM sequence for scrambling the OOK signal. The rule for generating LP-WUS includes one or more of the following:
at least one position having bit information of 0 in the transmission sequence of the OOK signal is mapped to T zeros, where T is related to at least one of the following: the length N₂ of the OFDM sequence, the bandwidth of the LP-WUS signal, or a subcarrier spacing;
at least one position having bit information of 1 in the transmission sequence of the OOK signal is mapped to at least one OFDM sequence;
at least one position having bit information of a2+b2×j in the transmission sequence of the OOK signal is mapped to at least one OFDM sequence;
at least one position having bit information of a2+b2×j in the transmission sequence of the OOK signal is mapped to one a2+b2×j×OFDM sequence;
at least one position having bit information of 0 in the generation sequence of the OOK signal is mapped to T zeros, where T is related to at least one of the following: the length N₂ of the OFDM sequence, the bandwidth of the LP-WUS signal, or a subcarrier spacing;
at least one position having bit information of 1 in the generation sequence of the OOK signal is mapped to at least one OFDM sequence;
at least one position having bit information of a2+b2×j in the generation sequence of the OOK signal is mapped to at least one a2+b2×j×OFDM sequence.

S3. The LP-WUR determines the type of wake-up signal specific to itself based on its capabilities, for receiving wake-up signals and obtaining wake-up indication information. The capabilities of the LP-WUR device include at least one of the following: an RF receiver based on OOK signal reception (with OOK signal as its dedicated reception signal), a baseband receiver based on OOK signal reception (with OOK signal as its dedicated reception signal), or an OFDM receiver (with OFDM signal as its dedicated reception signal).

It should be noted that the above description uses generating LP-WUS signal from OOK and OFDM signals as an example. However, in other embodiments of this disclosure, ASK and FSK signals can also be combined to generate LP-WUS signals. In the process of generating LP-WUS signals using ASK and FSK signals, both ASK and FSK signals can be used to generate a first sequence, and the other signal is used to generate a second sequence. Furthermore, in the process of generating LP-WUS signals using ASK and FSK signals, the method of generating the LP-WUS signal, the scrambling position of the first sequence, and the terminal processing method can all be obtained by referring to the description of the foregoing embodiments or by adaptive modifications of the foregoing embodiments.

As can be seen from the above description, in the embodiments of this disclosure, different LP-WUS waveforms are designed for OOK receiver and OFDM signal receiver. The method for generating LP-WUS signal based on the OOK and OFDM signals can carry both wake-up information for OFDM receiver and wake-up information for OOK receiver, thereby reducing the resource overhead caused by the base station transmitting OOK signal and OFDM signal separately. When both OOK and OFDM signals are present at a low-power signal transmission resource position, the wake-up terminal group information is determined based on the information about the OOK signal resource position scrambled by OFDM, which can effectively reduce the quantity of OFDM sequences.

The technical solutions provided in the embodiments of this disclosure are applicable to a variety of systems, especially 5G systems. For example, applicable systems may include Global System for Mobile Communication (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), Long Term Evolution Advanced (LTE-A), Universal Mobile Telecommunications System (UMTS), Worldwide Interoperability for Microwave Access (WiMAX), and 5G New Radio (NR). All of these systems include terminal device and network device. The systems may also include a core network component, such as Evolved Packet System (EPS) and 5G system (5GS).

The terminal device involved in the embodiments of this disclosure can be devices that provide voice and/or data connectivity to users, handheld devices with wireless connectivity, or other processing devices connected to a wireless modem. The names of the terminal devices may differ in different systems; for example, in a 5G system, a terminal device can be called User Equipment (UE). Wireless terminal devices can communicate with one or more core networks (CNs) via a Radio Access Network (RAN). Wireless terminal devices can be mobile terminal devices, such as mobile phones (or "cellular" phones) and computers with mobile terminal devices, for example, portable, pocket-sized, handheld, computer-embedded, or vehicle-mounted mobile devices that exchange voice and/or data with the RAN. Examples include Personal Communication Service (PCS) phones, cordless phones, Session Initiated Protocol (SIP) phones, Wireless Local Loop (WLL) stations, and Personal Digital Assistants (PDAs). Wireless terminal device can also be referred to as a system, subscriber unit, subscriber station, mobile station, mobile, remote station, access point, remote terminal, access terminal, user terminal, user agent, or user device, but this is not limited to these terms in the embodiments disclosed herein.

The network device involved in the embodiments of this disclosure may be a base station, which may include multiple cells providing services to terminals. Depending on the specific application, the base station may also be called an access point, or a device in the access network that communicates with the wireless terminal device through one or more sectors on the air interface, or other names. The network device may be used to exchange received air frames with Internet Protocol (IP) packets, acting as a router between the wireless terminal device and the rest of the access network, which may include an Internet Protocol (IP) communication network. The network device may also coordinate the attribute management of the air interface. For example, the network device involved in this disclosure can be a base transceiver station (BTS) in a Global System for Mobile communications (GSM) or Code Division Multiple Access (CDMA) system, a NodeB in a wide-band Code Division Multiple Access (WCDMA) system, an evolved Node B (eNB or e-NodeB) in a long term evolution (LTE) system, a 5G base station (gNB) in a next generation system, a Home evolved Node B (HeNB), a relay node, a femto, a pico, etc., and is not limited in this disclosure. In some network structures, the network device may include a centralized unit (CU) node and a distributed unit (DU) node, and the centralized unit and distributed unit may be geographically separated.

Network devices and terminal devices can each use one or more antennas for Multiple Input Multiple Output (MIMO) transmission. MIMO transmission can be Single User MIMO (SU-MIMO) or Multiple User MIMO (MU-MIMO). Depending on the shape and number of antenna combinations, MIMO transmission can be two-dimensional MIMO (2D-MIMO), three-dimensional MIMO (3D-MIMO), full-dimensional MIMO (FD-MIMO), or massive-MIMO. It can also be diversity transmission, pre-coded transmission, or beamforming transmission, etc.

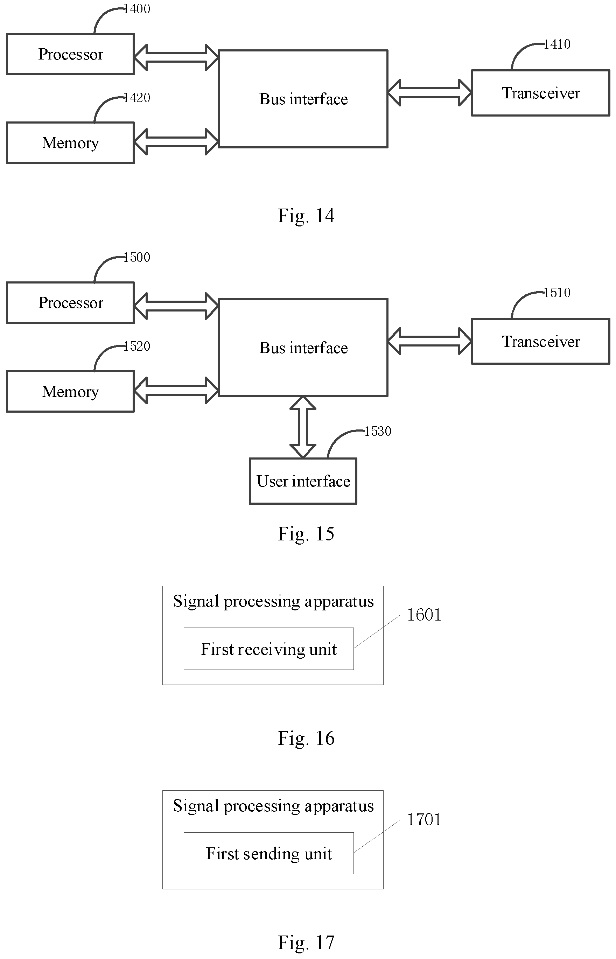

As shown in Fig. 14, a signal processing apparatus according to an embodiment of this disclosure is applied to a network device and includes: a processor 1400 used for reading a program from a memory 1420 and executing the following step:
sending first information to a terminal;
wherein the first information is used for receive a first signal, the first signal includes a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

The transceiver 1410 is used for receiving and sending data under the control of the processor 1400.

In Fig. 14, the bus architecture may include any number of interconnected buses and bridges, specifically linking various circuits such as one or more processors represented by processor 1400 and memory represented by memory 1420 together. The bus architecture may also link various other circuits such as peripherals, voltage regulators, and power management circuits, which are well known in the art and therefore will not be described further herein. The bus interface provides an interface. The transceiver 1410 may be multiple elements, including a transmitter and a receiver, providing a unit for communicating with various other devices over a transmission medium. The processor 1400 is responsible for managing the bus architecture and general processing, and the memory 1420 may store data used by the processor 1400 during operation.

The processor 1400 can be a central processing unit (CPU), an application-specific integrated circuit (ASIC), a field-programmable gate array (FPGA), or a complex programmable logic device (CPLD). The processor can also adopt a multicore architecture.

The processor 1400 is responsible for managing the bus architecture and general processing, while the memory 1420 can store the data used by the processor 1400 when performing operations.

In some embodiments, the different types of waveforms include any two of the following:
ASK waveform, FSK waveform, and OFDM waveform.

In some embodiments, the first information includes one or more of the following:
time domain resource position information of the first signal;
frequency domain resource position information of the first signal.

In some embodiments, the generation information of the first signal includes one or more of the following:
a length of the first signal;
transmission bit information of the first signal;
time-frequency resource mapping information of the first signal;
time domain resource position information of the first signal;
frequency domain resource position information of the first signal;
a quantity of terminals indicated by the first signal;
a quantity of terminal groups indicated by the first signal;
a quantity of POs associated with the first signal;
structural information of the first sequence;
generation information of the first sequence;
a length of the first sequence;
coding and modulation information of the first sequence;
information about a manner in which the second sequence is scrambled by the first sequence;
generation sequence information of the second sequence;
time domain resource position information of the second sequence;
frequency domain resource position information of the second sequence;
waveform information of the second sequence;
structural information of the second sequence;
a length of the second sequence;
coding and modulation information of the second sequence;
a quantity of bits of the first signal or the second sequence that are carried in one OFDM symbol.

In some embodiments, a length of the first signal has an association relationship with one or more of the following:
a length of the first sequence, a length of the second sequence, a bandwidth of the first signal, a quantity of bits of the first signal or the second sequence that are carried by one OFDM symbol, and a subcarrier spacing; or,
transmission bit information of the first signal is related to one or more of the following: bit information of the second sequence, bit information of a generation sequence of the second sequence, and bit information of the first sequence; or,
time-frequency resource mapping information of the first signal includes a time-frequency resource mapping manner for the first signal, wherein the time-frequency resource mapping manner includes:
   one bit of the first signal is mapped to one RE resource; or
   one bit of the first signal is mapped to P consecutive or non-consecutive REs or RBs, wherein P is related to one or more of the following: the quantity of bits of the first signal or the second sequence that are carried by one OFDM symbol, a quantity of points for least squares (LS) or discrete Fourier transform (DFT) of the second sequence, the bandwidth of the first signal, and the subcarrier spacing, and P is an integer greater than or equal to 1.

In some embodiments, the association relationship includes one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, and the quantity of bits of the first signal or the second sequence that are carried by one OFDM symbol, ceiling denotes a ceiling function, and L1 denotes an information bit length or transmission bit length of the second sequence.

It should be noted that the apparatus provided in this embodiment can implement all the method steps implemented in the above method embodiment and can achieve the same technical effect. Therefore, the parts and beneficial effects that are the same as those in the method embodiment will not be described in detail here.

As shown in Fig. 15, a signal processing apparatus according to an embodiment of this disclosure is applied to a terminal and includes: a processor 1500 used for reading a program from a memory 1520 and executing the following step:
sending first information to a terminal;
wherein the first information is used for receive a first signal, the first signal includes a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

The transceiver 1510 is used for receiving and send data under the control of the processor 1500.

In Fig. 15, the bus architecture may include any number of interconnected buses and bridges, specifically linking various circuits such as one or more processors represented by processor 1500 and memory represented by memory 1520. The bus architecture may also link various other circuits such as peripheral devices, voltage regulators, and power management circuits, which are well known in the art and therefore will not be described further herein. The bus interface provides an interface. Transceiver 1510 may be multiple elements, including a transmitter and a receiver, providing a unit for communicating with various other devices over a transmission medium. For different user equipment, user interface 1530 may also be an interface capable of connecting external or internal devices, including but not limited to keypads, displays, speakers, microphones, joysticks, etc.

The processor 1500 is responsible for managing the bus architecture and general processing, while the memory 1520 can store the data used by the processor 1500 when performing operations.

The processor 1500 can be a central processing unit (CPU), an application-specific integrated circuit (ASIC), a field-programmable gate array (FPGA), or a complex programmable logic device (CPLD). The processor can also adopt a multicore architecture.

By invoking a computer program stored in memory, the processor executes any of the methods described in the embodiments of this disclosure according to the obtained executable instructions. The processor and the memory may also be physically separated.

In some embodiments, the different types of waveforms include any two of the following:
ASK waveform, FSK waveform, and OFDM waveform.

The processor 1500 is also used for reading the program and performing the following steps:
determining first information; and
receiving the first signal based on the first information, wherein the first information includes one or more of the following:
   time domain resource position information of the first signal;
   frequency domain resource position information of the first signal.

In some embodiments, the generation information of the first signal includes one or more of the following:
a length of the first signal;
transmission bit information of the first signal;
time-frequency resource mapping information of the first signal;
time domain resource position information of the first signal;
frequency domain resource position information of the first signal;
a quantity of terminals indicated by the first signal;
a quantity of terminal groups indicated by the first signal;
a quantity of POs associated with the first signal;
structural information of the first sequence;
generation information of the first sequence;
coding and modulation information of the first sequence;
length information of the first sequence;
information about a manner in which the second sequence is scrambled by the first sequence;
generation sequence information of the second sequence;
length information of the second sequence;
time domain resource position information or frequency domain resource position information of the second sequence;
waveform information of the second sequence;
structural information of the second sequence;
coding and modulation information of the second sequence;
a quantity of bits of the first signal or the second sequence that are carried in one OFDM symbol.

In some embodiments, a length of the first signal has an association relationship with one or more of the following:
a length of the first sequence, a length of the second sequence, a bandwidth of the first signal, coding and modulation information of the second sequence, a quantity of bits of the first signal or the second sequence that are carried by one OFDM symbol, and a subcarrier spacing.

In some embodiments, the association relationship includes one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, the quantity of bits of the first signal or the second sequence that are carried by one OFDM symbol, and the coding and modulation information of the second sequence, ceiling denotes a ceiling function, and L1 denotes an information bit length or transmission bit length of the second sequence.

In some embodiments, the position where the second sequence is scrambled by the first sequence is related to one or more of the following: bit information of the first sequence, bit information of the second sequence, the wake-up terminal information carried by the second sequence, the wake-up terminal group information carried by the second sequence, and the wake-up indication information carried by the second sequence; and/or
transmission bit information of the first signal is related to one or more of the following: the bit information of the second sequence, bit information of a generation sequence of the second sequence, and the bit information of the first sequence.

In some embodiments, the position where the second sequence is scrambled by the first sequence includes one or more of the following:
at least one sequence position having an information bit of 1 in the generation sequence of the second sequence, or a time domain resource position and/or frequency domain resource position to which the at least one sequence position having the information bit of 1 is mapped;
at least one sequence position having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position carrying the same wake-up indication information, the same wake-up terminal information, or the same wake-up terminal group information as that carried by the first sequence and having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position having an information bit of a1+b1×j in the generation sequence of the second sequence, or a time domain resource position and/or frequency domain resource position to which the at least one sequence position having the information bit of a1+b1×j is mapped;
at least one sequence position having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position carrying the same wake-up indication information, the same wake-up terminal information, or the same wake-up terminal group information as that carried by the first sequence and having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position being associated with or having the same index as a wake-up terminal index or a wake-up terminal group index carried by the first sequence and having an information bit of 1 in a preamble field of the second sequence, or a time domain resource position and/or frequency domain resource position to which the at least one sequence position having the information bit of 1 is mapped;
at least one sequence position being associated with or having the same index as the wake-up terminal index or the wake-up terminal group index carried by the first sequence and having an information bit of a1+b1×j in the preamble field of the second sequence, or a time domain resource position and/or frequency domain resource position to which the at least one sequence position having the information bit of a1+b1×j is mapped;
at least one sequence position having an information bit of a2+b2×j after coding and modulation in the second sequence, or a time domain resource position and/or frequency domain resource position to which the at least one sequence position having the information bit of a2+b2×j is mapped;
wherein a1, b1, a2 and b2 are any real numbers.

In some embodiments, the first signal is generated in one or more of the following manners:
at least one position having bit information of 0 in the second sequence is mapped to a number T of zeros, wherein T is related to one or more of a length of the first sequence, a bandwidth of the first signal, and a subcarrier spacing, and T is an integer greater than or equal to 1;
at least one position having bit information of 1 in the second sequence is mapped to at least one first sequence;
at least one position having bit information of a1+b1×j or a2+b2×j in the second sequence is mapped to at least one first sequence;
at least one position having bit information of a1+b1×j or a2+b2×j in the second sequence is mapped to at least one product of a1+b1×j and the first sequence or is mapped to at least one product of a2+b2×j and the first sequence;
wherein a1, b1, a2 and b2 are any real numbers.

In some embodiments, the time-frequency resource mapping information of the first signal includes a time-frequency resource mapping manner for the first signal, wherein the time-frequency resource mapping manner includes:
one bit of the first signal is mapped to one RE resource; or
one bit of the first signal is mapped to P consecutive or non-consecutive REs or RBs, wherein P is related to one or more of the following: the quantity of bits of the first signal or the second sequence that are carried by one OFDM symbol, a quantity of points for least squares (LS) or discrete Fourier transform (DFT) of the second sequence, the bandwidth of the first signal, and a subcarrier spacing, and P is an integer greater than or equal to 1.

In some embodiments, the first sequence is generated based on an OFDM waveform and is used for carrying a wake-up signal specific to a first type of receiver;
the second sequence is generated based on an ASK or FSK waveform and is used for carrying a wake-up signal specific to a second type of receiver;
wherein the first type of receiver includes an OFDM receiver, and the second type of receiver includes a baseband receiver or a radio frequency receiver.

In some embodiments, the first sequence is an orthogonal sequence or a random sequence; or
the first sequence is an orthogonal sequence or a random sequence, and the first sequence is generated by cyclic shifting a base sequence; or
the first sequence is an orthogonal sequence or a random sequence, and the first sequence is generated based on a third sequence;
   and/or
the second sequence is generated based on an ASK signal or an FSK signal; or
the second sequence is generated based on an ASK signal or an FSK signal, and the second sequence is generated by coding and modulating a generation sequence; or
the second sequence is generated based on an ASK signal or an FSK signal, and the second sequence is a generation sequence.

The processor 1500 is also used for reading the program and performing the following steps:
obtaining the first sequence;
obtaining the wake-up indication information carried by the first sequence and/or the wake-up indication information carried by the second sequence.

In some embodiments, one or more of the first sequence, the second sequence, the wake-up terminal information, and the wake-up terminal group information are related to one or more of the following information:
cell ID, UE ID, PO index, PF index, subgroup index, terminal group identifier, area ID.

It should be noted that the apparatus provided in this embodiment can implement all the method steps implemented in the above method embodiment and can achieve the same technical effect. Therefore, the parts and beneficial effects that are the same as those in the method embodiment will not be described in detail here.

As shown in Fig. 16, a signal processing apparatus according to an embodiment of this disclosure is applied to a terminal, and includes:
a first receiving unit 1601, configured to receive a first signal;
wherein the first signal includes a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

In some embodiments, the different types of waveforms include any two of the following:
ASK waveform, FSK waveform, and OFDM waveform.

In some embodiments, the apparatus may further include:
a first determining unit, configured to determine first information;
the first receiving unit is further configured to receive the first signal based on the first information, wherein the first information includes one or more of the following:
   time domain resource position information of the first signal;
   frequency domain resource position information of the first signal.

In some embodiments, the generation information of the first signal includes one or more of the following:
a length of the first signal;
transmission bit information of the first signal;
time-frequency resource mapping information of the first signal;
time domain resource position information of the first signal;
frequency domain resource position information of the first signal;
a quantity of terminals indicated by the first signal;
a quantity of terminal groups indicated by the first signal;
a quantity of POs associated with the first signal;
structural information of the first sequence;
generation information of the first sequence;
coding and modulation information of the first sequence;
length information of the first sequence;
information about a manner in which the second sequence is scrambled by the first sequence;
generation sequence information of the second sequence;
length information of the second sequence;
time domain resource position information of the second sequence;
frequency domain resource position information of the second sequence;
waveform information of the second sequence;
structural information of the second sequence;
coding and modulation information of the second sequence;
a quantity of bits of the first signal or the second sequence that are carried in one OFDM symbol.

In some embodiments, a length of the first signal has an association relationship with one or more of the following:
a length of the first sequence, a length of the second sequence, a bandwidth of the first signal, coding and modulation information of the second sequence, a quantity of bits of the first signal or the second sequence that are carried by one OFDM symbol, and a subcarrier spacing.

In some embodiments, the association relationship includes one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, the quantity of bits of the first signal or the second sequence that are carried by one OFDM symbol, and the coding and modulation information of the second sequence, ceiling denotes a ceiling function, and L1 denotes an information bit length or transmission bit length of the second sequence.

In some embodiments, the position where the second sequence is scrambled by the first sequence is related to one or more of the following: bit information of the first sequence, bit information of the second sequence, the wake-up terminal information carried by the second sequence, the wake-up terminal group information carried by the second sequence, and the wake-up indication information carried by the second sequence; and/or
transmission bit information of the first signal is related to one or more of the following: the bit information of the second sequence, bit information of a generation sequence of the second sequence, and the bit information of the first sequence.

In some embodiments, the position where the second sequence is scrambled by the first sequence includes one or more of the following:
at least one sequence position having an information bit of 1 in the generation sequence of the second sequence, or a time domain resource position and/or frequency domain resource position to which the at least one sequence position having the information bit of 1 is mapped;
at least one sequence position having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position carrying the same wake-up indication information, the same wake-up terminal information, or the same wake-up terminal group information as that carried by the first sequence and having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position having an information bit of a1+b1×j in the generation sequence of the second sequence, or a time domain resource position and/or frequency domain resource position to which the at least one sequence position having the information bit of a1+b1×j is mapped;
at least one sequence position having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position carrying the same wake-up indication information, the same wake-up terminal information, or the same wake-up terminal group information as that carried by the first sequence and having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position being associated with or having the same index as a wake-up terminal index or a wake-up terminal group index carried by the first sequence and having an information bit of 1 in a preamble field of the second sequence, or a time domain resource position and/or frequency domain resource position to which the at least one sequence position having the information bit of 1 is mapped;
at least one sequence position being associated with or having the same index as the wake-up terminal index or the wake-up terminal group index carried by the first sequence and having an information bit of a1+b1×j in the preamble field of the second sequence, or a time domain resource position and/or frequency domain resource position to which the at least one sequence position having the information bit of a1+b1×j is mapped;
at least one sequence position having an information bit of a2+b2×j after coding and modulation in the second sequence, or a time domain resource position and/or frequency domain resource position to which the at least one sequence position having the information bit of a2+b2×j is mapped;
wherein a1, b1, a2 and b2 are any real numbers.

In some embodiments, the first signal is generated in one or more of the following manners:
at least one position having bit information of 0 in the second sequence is mapped to a number T of zeros, wherein T is related to one or more of a length of the first sequence, a bandwidth of the first signal, and a subcarrier spacing, and T is an integer greater than or equal to 1;
at least one position having bit information of 1 in the second sequence is mapped to at least one first sequence;
at least one position having bit information of a1+b1×j or a2+b2×j in the second sequence is mapped to at least one first sequence;
at least one position having bit information of a1+b1×j or a2+b2×j in the second sequence is mapped to at least one product of a1+b1×j and the first sequence or is mapped to at least one product of a2+b2×j and the first sequence;
wherein a1, b1, a2 and b2 are any real numbers.

In some embodiments, the time-frequency resource mapping information of the first signal includes a time-frequency resource mapping manner for the first signal, wherein the time-frequency resource mapping manner includes:
one bit of the first signal is mapped to one RE resource; or
one bit of the first signal is mapped to P consecutive or non-consecutive REs or RBs, wherein P is related to one or more of the following: the quantity of bits of the first signal or the second sequence that are carried by one OFDM symbol, a quantity of points for least squares (LS) or discrete Fourier transform (DFT) of the second sequence, the bandwidth of the first signal, and a subcarrier spacing, and P is an integer greater than or equal to 1.

In some embodiments, the first sequence is generated based on an OFDM waveform and is used for carrying a wake-up signal specific to a first type of receiver;
the second sequence is generated based on an ASK or FSK waveform and is used for carrying a wake-up signal specific to a second type of receiver;
wherein the first type of receiver includes an OFDM receiver, and the second type of receiver includes a baseband receiver or a radio frequency receiver.

In some embodiments, the first sequence is an orthogonal sequence or a random sequence; or
the first sequence is an orthogonal sequence or a random sequence, and the first sequence is generated by cyclic shifting a base sequence; or
the first sequence is an orthogonal sequence or a random sequence, and the first sequence is generated based on a third sequence;
   and/or
the second sequence is generated based on an ASK signal or an FSK signal; or
the second sequence is generated based on an ASK signal or an FSK signal, and the second sequence is generated by coding and modulating a generation sequence; or
the second sequence is generated based on an ASK signal or an FSK signal, and the second sequence is a generation sequence.

In some embodiments, the apparatus may further include:
a first obtaining unit, configured to obtain the wake-up indication information based on the first signal.

In some embodiments, the first obtaining unit is further configured to:
obtain the first sequence;
obtain the wake-up indication information carried by the first sequence and/or the wake-up indication information carried by the second sequence.

In some embodiments, one or more of the first sequence, the second sequence, the wake-up terminal information, and the wake-up terminal group information are related to one or more of the following information:
cell ID, UE ID, PO index, PF index, subgroup index, terminal group identifier, area ID.

It should be noted that the apparatus provided in this embodiment can implement all the method steps implemented in the above method embodiment and can achieve the same technical effect. Therefore, the parts and beneficial effects that are the same as those in the method embodiment will not be described in detail here.

As shown in Fig. 17, a signal processing apparatus according to an embodiment of this disclosure is applied to a network device, and includes:
a first sending unit 1701, configured to send first information to a terminal;
wherein the first information is used for receive a first signal, the first signal includes a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

In some embodiments, the different types of waveforms include any two of the following:
ASK waveform, FSK waveform, and OFDM waveform.

In some embodiments, the first information includes one or more of the following:
time domain resource position information of the first signal;
frequency domain resource position information of the first signal.

In some embodiments, the generation information of the first signal includes one or more of the following:
a length of the first signal;
transmission bit information of the first signal;
time-frequency resource mapping information of the first signal;
time domain resource position information of the first signal;
frequency domain resource position information of the first signal;
a quantity of terminals indicated by the first signal;
a quantity of terminal groups indicated by the first signal;
a quantity of POs associated with the first signal;
structural information of the first sequence;
generation information of the first sequence;
a length of the first sequence;
coding and modulation information of the first sequence;
information about a manner in which the second sequence is scrambled by the first sequence;
generation sequence information of the second sequence;
time domain resource position information of the second sequence;
frequency domain resource position information of the second sequence;
waveform information of the second sequence;
structural information of the second sequence;
a length of the second sequence;
coding and modulation information of the second sequence;
a quantity of bits of the first signal or the second sequence that are carried in one OFDM symbol.

In some embodiments, a length of the first signal has an association relationship with one or more of the following:
a length of the first sequence, a length of the second sequence, a bandwidth of the first signal, a quantity of bits of the first signal or the second sequence that are carried by one OFDM symbol, and a subcarrier spacing; or,
transmission bit information of the first signal is related to one or more of the following: bit information of the second sequence, bit information of a generation sequence of the second sequence, and bit information of the first sequence; or,
time-frequency resource mapping information of the first signal includes a time-frequency resource mapping manner for the first signal, wherein the time-frequency resource mapping manner includes:
   one bit of the first signal is mapped to one RE resource; or
   one bit of the first signal is mapped to P consecutive or non-consecutive REs or RBs, wherein P is related to one or more of the following: the quantity of bits of the first signal or the second sequence that are carried by one OFDM symbol, a quantity of points for least squares (LS) or discrete Fourier transform (DFT) of the second sequence, the bandwidth of the first signal, and the subcarrier spacing, and P is an integer greater than or equal to 1.

In some embodiments, the association relationship includes one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, and the quantity of bits of the first signal or the second sequence that are carried by one OFDM symbol, ceiling denotes a ceiling function, and L1 denotes an information bit length or transmission bit length of the second sequence.

It should be noted that the apparatus provided in this embodiment can implement all the method steps implemented in the above method embodiment and can achieve the same technical effect. Therefore, the parts and beneficial effects that are the same as those in the method embodiment will not be described in detail here.

It should be noted that the division of units in the embodiments of this disclosure is illustrative and only denotes one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to related technologies, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, portable hard drives, read-only memory (ROM), random access memory (RAM), magnetic disks, or optical discs.

An embodiment of this disclosure also provides a communication device, including: a memory, a processor, and a program stored in the memory and executable by the processor, wherein the program, when executed by the processor, implements the steps in the signal processing method described above.

An embodiment of this disclosure also provides a processor-readable storage medium storing a program. When executed by a processor, the program implements the various processes of the above-described signal processing method embodiments and achieves the same technical effects. To avoid repetition, further details are omitted here. The readable storage medium can be any available medium or data storage device accessible to the processor, including but not limited to magnetic storage (e.g., floppy disks, hard disks, magnetic tapes, magneto-optical (MO) discs), optical storage (e.g., compact discs (CDs), digital versatile discs (DVDs), Blu-ray discs (BD), high-definition versatile discs (HVD)), and semiconductor storage (e.g., ROMs, erasable programmable read-only memory (EPROMs), electrically erasable programmable read-only memory (EEPROMs), non-volatile memory (NAND flash), solid-state drives (SSDs)).

It should be noted that, in this document, the terms "include", "comprise" or any other variations thereof are intended to cover non-exclusive inclusion, such that a process, method, article, or apparatus that includes a list of elements includes not only those elements but also other elements not expressly listed, or elements inherent in such a process, method, article, or apparatus. Unless otherwise specified, an element defined by the phrase "including one..." does not exclude the presence of other identical elements in the process, method, article, or apparatus that includes that element.

Through the above description of the embodiments, those skilled in the art can clearly understand that the methods of the above embodiments can be implemented by means of software plus necessary general-purpose hardware platforms. Of course, they can also be implemented by hardware, but in many cases the former is a better implementation method. Based on this understanding, the technical solution of this disclosure, in essence, or the part that contributes to the related technology, can be embodied in the form of a software product. This computer software product is stored in a storage medium (such as ROM/RAM, magnetic disk, optical disc) and includes several instructions to cause a terminal (which may be a mobile phone, computer, server, air conditioner, or network device, etc.) to execute the methods described in the various embodiments of this disclosure.

Embodiments of this disclosure have been described above with reference to the accompanying drawings. However, this disclosure is not limited to the specific embodiments described above. The specific embodiments described above are merely illustrative and not restrictive. Those skilled in the art can make many other forms under the guidance of this disclosure without departing from the spirit and scope of the claims, and all of these forms are within the scope of this disclosure.

## Claims

1. A signal processing method, performed by a terminal, comprising:
receiving a first signal;
wherein the first signal comprises a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

2. The method according to claim 1, wherein the different types of waveforms comprise any two of the following:
amplitude shift keying (ASK) waveform, frequency shift keying (FSK) waveform, and orthogonal frequency division multiplexing (OFDM) waveform.

3. The method according to claim 1, wherein the receiving the first signal comprises:
determining first information; and
receiving the first signal based on the first information, wherein the first information comprises one or more of the following:
generation information of the first signal;
time domain resource position information of the first signal;
frequency domain resource position information of the first signal.

4. The method according to claim 3, wherein the generation information of the first signal comprises one or more of the following:
a length of the first signal;
transmission bit information of the first signal;
a quantity of terminals indicated by the first signal;
a quantity of terminal groups indicated by the first signal;
a quantity of paging occasions (POs) associated with the first signal;
time-frequency resource mapping information of the first signal;
time domain resource position information of the first signal;
frequency domain resource position information of the first signal;
structural information of the first sequence;
generation information of the first sequence;
coding and modulation information of the first sequence;
length information of the first sequence;
information about a manner in which the second sequence is scrambled by the first sequence;
generation sequence information of the second sequence;
length information of the second sequence;
time domain resource position information of the second sequence;
frequency domain resource position information of the second sequence;
waveform information of the second sequence;
structural information of the second sequence;
coding and modulation information of the second sequence;
a quantity of bits of the first signal or the second sequence that are carried in one OFDM symbol.

5. The method according to claim 3 or 4, wherein a length of the first signal has an association relationship with one or more of the following:
a length of the first sequence, a length of the second sequence, a bandwidth of the first signal, coding and modulation information of the second sequence, a quantity of bits of the first signal or the second sequence that are carried by one OFDM symbol, and a subcarrier spacing.

6. The method according to claim 5, wherein the association relationship comprises one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$
wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, the quantity M of bits of the first signal or the second sequence that are carried by one OFDM symbol, and the coding and modulation information of the second sequence, ceiling denotes a ceiling function, and L1 denotes an information bit length or transmission bit length of the second sequence.

7. The method according to claim 1, wherein,
a position where the second sequence is scrambled by the first sequence is related to one or more of the following: bit information of the first sequence, bit information of the second sequence, the wake-up terminal information carried by the second sequence, the wake-up terminal group information carried by the second sequence, and the wake-up indication information carried by the second sequence; and/or
transmission bit information of the first signal is related to one or more of the following: the bit information of the second sequence, bit information of a generation sequence of the second sequence, and the bit information of the first sequence.

8. The method according to claim 7, wherein the position where the second sequence is scrambled by the first sequence comprises one or more of the following:
at least one sequence position having an information bit of 1 in the generation sequence of the second sequence, or a time domain resource position and/or frequency domain resource position to which the at least one sequence position having the information bit of 1 is mapped;
at least one sequence position having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position carrying the same wake-up indication information, the same wake-up terminal information, or the same wake-up terminal group information as that carried by the first sequence and having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position having an information bit of a1+b1×j in the generation sequence of the second sequence, or a time domain resource position and/or frequency domain resource position to which the at least one sequence position having the information bit of a1+b1×j is mapped;
at least one sequence position having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position carrying the same wake-up indication information, the same wake-up terminal information, or the same wake-up terminal group information as that carried by the first sequence and having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position being associated with or having the same index as a wake-up terminal index or a wake-up terminal group index carried by the first sequence and having an information bit of 1 in a preamble field of the second sequence, or a time domain resource position and/or frequency domain resource position to which the at least one sequence position having the information bit of 1 is mapped;
at least one sequence position being associated with or having the same index as the wake-up terminal index or the wake-up terminal group index carried by the first sequence and having an information bit of a1+b1×j in the preamble field of the second sequence, or a time domain resource position and/or frequency domain resource position to which the at least one sequence position having the information bit of a1+b1×j is mapped;
at least one sequence position having an information bit of a2+b2×j after coding and modulation in the second sequence, or a time domain resource position and/or frequency domain resource position to which the at least one sequence position having the information bit of a2+b2×j is mapped;
wherein a1, b1, a2 and b2 are any real numbers.

9. The method according to claim 1, wherein the first signal is generated in one or more of the following manners:
at least one position having bit information of 0 in the second sequence is mapped to a number T of zeros, wherein T is related to one or more of a length of the first sequence, a bandwidth of the first signal, and a subcarrier spacing, and T is an integer greater than or equal to 1;
at least one position having bit information of 1 in the second sequence is mapped to at least one first sequence;
at least one position having bit information of a1+b1×j or a2+b2×j in the second sequence is mapped to at least one first sequence;
at least one position having bit information of a1+b1×j or a2+b2×j in the second sequence is mapped to at least one product of a1+b1×j and the first sequence or is mapped to at least one product of a2+b2×j and the first sequence;
wherein a1, b1, a2 and b2 are any real numbers.

10. The method according to claim 4, wherein the time-frequency resource mapping information of the first signal comprises a time-frequency resource mapping manner for the first signal, wherein the time-frequency resource mapping manner comprises:
one bit of the first signal is mapped to one resource element (RE) resource; or
one bit of the first signal is mapped to P consecutive or non-consecutive REs or RBs, wherein P is related to one or more of the following: a quantity M of bits of the first signal or the second sequence that are carried by one OFDM symbol, a quantity of points for least squares (LS) or discrete Fourier transform (DFT) of the second sequence, a bandwidth of the first signal, and a subcarrier spacing; and P is an integer greater than or equal to 1.

11. The method according to claim 1, wherein,
the first sequence is generated based on an OFDM waveform and is used for carrying a wake-up signal specific to a first type of receiver;
the second sequence is generated based on an ASK or FSK waveform and is used for carrying a wake-up signal specific to a second type of receiver;
wherein the first type of receiver comprises an OFDM receiver, and the second type of receiver comprises a baseband receiver or a radio frequency receiver.

12. The method according to claim 1, wherein,
the first sequence is an orthogonal sequence or a random sequence; or
the first sequence is an orthogonal sequence or a random sequence, and the first sequence is generated by cyclic shifting a base sequence; or
the first sequence is an orthogonal sequence or a random sequence, and the first sequence is generated based on a third sequence;
and/or
the second sequence is generated based on an ASK signal or an FSK signal; or
the second sequence is generated based on an ASK signal or an FSK signal, and the second sequence is generated by coding and modulating a generation sequence; or
the second sequence is generated based on an ASK signal or an FSK signal, and the second sequence is a generation sequence.

13. The method according to claim 7, 11 or 12, further comprising
obtaining the wake-up indication information based on the first signal, wherein the obtaining the wake-up indication information based on the first signal comprises:
obtaining the first sequence;
obtaining the wake-up indication information carried by the first sequence and/or the wake-up indication information carried by the second sequence.

14. The method according to claim 13, wherein,
one or more of the first sequence, the second sequence, the wake-up terminal information, and the wake-up terminal group information are related to one or more of the following information:
cell identifier (ID), user equipment (UE) ID, paging occasion (PO) index, paging frame (PF) index, subgroup index, UE group ID, and area ID.

15. A signal processing method, performed by a network device, comprising:
sending first information to a terminal;
wherein the first information is used for receive a first signal, the first signal comprises a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

16. The method according to claim 15, wherein the different types of waveforms comprise any two of the following:
ASK waveform, FSK waveform, and OFDM waveform.

17. The method according to claim 15, wherein the first information comprises one or more of the following:
generation information of the first signal;
time domain resource position information of the first signal;
frequency domain resource position information of the first signal.

18. The method according to claim 17, wherein the generation information of the first signal comprises one or more of the following:
a length of the first signal;
transmission bit information of the first signal;
time-frequency resource mapping information of the first signal;
time domain resource position information of the first signal;
frequency domain resource position information of the first signal;
a quantity of terminals indicated by the first signal;
a quantity of terminal groups indicated by the first signal;
a quantity of POs associated with the first signal;
structural information of the first sequence;
generation information of the first sequence;
a length of the first sequence;
coding and modulation information of the first sequence;
information about a manner in which the second sequence is scrambled by the first sequence;
generation sequence information of the second sequence;
time domain resource position information of the second sequence;
frequency domain resource position information of the second sequence;
waveform information of the second sequence;
structural information of the second sequence;
a length of the second sequence;
coding and modulation information of the second sequence;
a quantity of bits of the first signal or the second sequence that are carried in one OFDM symbol.

19. The method according to any one of claims 15 to 18, wherein,
a length of the first signal has an association relationship with one or more of the following:
a length of the first sequence, a length of the second sequence, a bandwidth of the first signal, a quantity of bits of the first signal or the second sequence that are carried by one OFDM symbol, and a subcarrier spacing; or,
transmission bit information of the first signal is related to one or more of the following: bit information of the second sequence, bit information of a generation sequence of the second sequence, and bit information of the first sequence; or,
time-frequency resource mapping information of the first signal comprises a time-frequency resource mapping manner for the first signal, wherein the time-frequency resource mapping manner comprises:
one bit of the first signal is mapped to one RE resource; or
one bit of the first signal is mapped to P consecutive or non-consecutive REs or RBs, wherein P is related to one or more of the following: the quantity of bits of the first signal or the second sequence that are carried by one OFDM symbol, a quantity of points for least squares (LS) or discrete Fourier transform (DFT) of the second sequence, the bandwidth of the first signal, and the subcarrier spacing, and P is an integer greater than or equal to 1.

20. The method according to claim 19, wherein the association relationship comprises one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, and the quantity of bits of the first signal or the second sequence that are carried by one OFDM symbol, ceiling denotes a ceiling function, and L1 denotes an information bit length or transmission bit length of the second sequence.

21. A signal processing apparatus, applied to a terminal, comprising: a memory, a transceiver, and a processor;
wherein the memory is used for storing a computer program; the transceiver is used for transmitting and receiving data under the control of the processor; and the processor is used for reading the computer program from the memory and performing the following step:
receiving a first signal;
wherein the first signal comprises a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

22. The apparatus according to claim 21, wherein the different types of waveforms comprise any two of the following:
ASK waveform, FSK waveform, and OFDM waveform.

23. The apparatus according to claim 21, wherein the processor is further used for reading the computer program from the memory and performing the following steps:
determining first information; and
receiving the first signal based on the first information, wherein the first information comprises one or more of the following:
generation information of the first signal;
time domain resource position information of the first signal;
frequency domain resource position information of the first signal.

24. The apparatus according to claim 23, wherein,
the generation information of the first signal comprises one or more of the following:
a length of the first signal;
transmission bit information of the first signal;
time-frequency resource mapping information of the first signal;
time domain resource position information of the first signal;
frequency domain resource position information of the first signal;
a quantity of terminals indicated by the first signal;
a quantity of terminal groups indicated by the first signal;
a quantity of POs associated with the first signal;
structural information of the first sequence;
generation information of the first sequence;
coding and modulation information of the first sequence;
length information of the first sequence;
information about a manner in which the second sequence is scrambled by the first sequence;
generation sequence information of the second sequence;
length information of the second sequence;
time domain resource position information of the second sequence;
frequency domain resource position information of the second sequence;
waveform information of the second sequence;
structural information of the second sequence;
coding and modulation information of the second sequence;
a quantity of bits of the first signal or the second sequence that are carried in one OFDM symbol.

25. The apparatus according to claim 23 or 24, wherein,
a length of the first signal has an association relationship with one or more of the following:
a length of the first sequence, a length of the second sequence, a bandwidth of the first signal, coding and modulation information of the second sequence, a quantity of bits of the first signal or the second sequence that are carried by one OFDM symbol, and a subcarrier spacing.

26. The apparatus according to claim 25, wherein the association relationship comprises one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, the quantity of bits of the first signal or the second sequence that are carried by one OFDM symbol, and the coding and modulation information of the second sequence, ceiling denotes a ceiling function, and L1 denotes an information bit length or transmission bit length of the second sequence.

27. The apparatus according to claim 21, wherein a position where the second sequence is scrambled by the first sequence is related to one or more of the following: bit information of the first sequence, bit information of the second sequence, the wake-up terminal information carried by the second sequence, the wake-up terminal group information carried by the second sequence, and the wake-up indication information carried by the second sequence; and/or
transmission bit information of the first signal is related to one or more of the following: the bit information of the second sequence, bit information of a generation sequence of the second sequence, and the bit information of the first sequence.

28. The apparatus according to claim 27, wherein the position where the second sequence is scrambled by the first sequence comprises one or more of the following:
at least one sequence position having an information bit of 1 in the generation sequence of the second sequence, or a time domain resource position and/or frequency domain resource position to which the at least one sequence position having the information bit of 1 is mapped;
at least one sequence position having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position carrying the same wake-up indication information, the same wake-up terminal information, or the same wake-up terminal group information as that carried by the first sequence and having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position having an information bit of a1+b1×j in the generation sequence of the second sequence, or a time domain resource position and/or frequency domain resource position to which the at least one sequence position having the information bit of a1+b1×j is mapped;
at least one sequence position having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position carrying the same wake-up indication information, the same wake-up terminal information, or the same wake-up terminal group information as that carried by the first sequence and having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position being associated with or having the same index as a wake-up terminal index or a wake-up terminal group index carried by the first sequence and having an information bit of 1 in a preamble field of the second sequence, or a time domain resource position and/or frequency domain resource position to which the at least one sequence position having the information bit of 1 is mapped;
at least one sequence position being associated with or having the same index as the wake-up terminal index or the wake-up terminal group index carried by the first sequence and having an information bit of a1+b1×j in the preamble field of the second sequence, or a time domain resource position and/or frequency domain resource position to which the at least one sequence position having the information bit of a1+b1×j is mapped;
at least one sequence position having an information bit of a2+b2×j after coding and modulation in the second sequence, or a time domain resource position and/or frequency domain resource position to which the at least one sequence position having the information bit of a2+b2×j is mapped;
wherein a1, b1, a2 and b2 are any real numbers.

29. The apparatus according to claim 21, wherein the first signal is generated in one or more of the following manners:
at least one position having bit information of 0 in the second sequence is mapped to a number T of zeros, wherein T is related to one or more of a length of the first sequence, a bandwidth of the first signal, and a subcarrier spacing, and T is an integer greater than or equal to 1;
at least one position having bit information of 1 in the second sequence is mapped to at least one first sequence;
at least one position having bit information of a1+b1×j or a2+b2×j in the second sequence is mapped to at least one first sequence;
at least one position having bit information of a1+b1×j or a2+b2×j in the second sequence is mapped to at least one product of a1+b1×j and the first sequence or is mapped to at least one product of a2+b2×j and the first sequence;
wherein a1, b1, a2 and b2 are any real numbers.

30. The apparatus according to claim 24, wherein the time-frequency resource mapping information of the first signal comprises a time-frequency resource mapping manner for the first signal, wherein the time-frequency resource mapping manner comprises:
one bit of the first signal is mapped to one RE resource; or
one bit of the first signal is mapped to P consecutive or non-consecutive REs or RBs, wherein P is related to one or more of the following: the quantity of bits of the first signal or the second sequence that are carried by one OFDM symbol, a quantity of points for least squares (LS) or discrete Fourier transform (DFT) of the second sequence, the bandwidth of the first signal, and a subcarrier spacing, and P is an integer greater than or equal to 1.

31. The apparatus according to claim 21, wherein,
the first sequence is generated based on an OFDM waveform and is used for carrying a wake-up signal specific to a first type of receiver;
the second sequence is generated based on an ASK or FSK waveform and is used for carrying a wake-up signal specific to a second type of receiver;
wherein the first type of receiver comprises an OFDM receiver, and the second type of receiver comprises a baseband receiver or a radio frequency receiver.

32. The apparatus according to claim 21, wherein,
the first sequence is an orthogonal sequence or a random sequence; or
the first sequence is an orthogonal sequence or a random sequence, and the first sequence is generated by cyclic shifting a base sequence; or
the first sequence is an orthogonal sequence or a random sequence, and the first sequence is generated based on a third sequence;
and/or
the second sequence is generated based on an ASK signal or an FSK signal; or
the second sequence is generated based on an ASK signal or an FSK signal, and the second sequence is generated by coding and modulating a generation sequence; or
the second sequence is generated based on an ASK signal or an FSK signal, and the second sequence is a generation sequence.

33. The apparatus according to claim 27, 31 or 32, wherein the processor is further used for reading the computer program from the memory and performing the following step: obtaining the wake-up indication information based on the first signal, wherein the obtaining the wake-up indication information based on the first signal comprises:
obtaining the first sequence;
obtaining the wake-up indication information carried by the first sequence and/or the wake-up indication information carried by the second sequence.

34. The apparatus according to claim 33, wherein,
one or more of the first sequence, the second sequence, the wake-up terminal information, and the wake-up terminal group information are related to one or more of the following information:
cell ID, UE ID, paging occasion (PO) index, paging frame (PF) index, subgroup index, UE group ID, and area ID.

35. A signal processing apparatus, applied to a network device, comprising: a memory, a transceiver, and a processor;
wherein the memory is used for storing a computer program; the transceiver is used for transmitting and receiving data under the control of the processor; and the processor is used for reading the computer program from the memory and performing the following step:
sending first information to a terminal;
wherein the first information is used for receive a first signal, the first signal comprises a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

36. The apparatus according to claim 35, wherein the different types of waveforms comprise any two of the following:
ASK waveform, FSK waveform, and OFDM waveform.

37. The apparatus according to claim 35, wherein the first information comprises one or more of the following:
generation information of the first signal;
time domain resource position information of the first signal;
frequency domain resource position information of the first signal.

38. The apparatus according to claim 37, wherein the generation information of the first signal comprises one or more of the following:
a length of the first signal;
transmission bit information of the first signal;
time-frequency resource mapping information of the first signal;
time domain resource position information of the first signal;
frequency domain resource position information of the first signal;
a quantity of terminals indicated by the first signal;
a quantity of terminal groups indicated by the first signal;
a quantity of POs associated with the first signal;
structural information of the first sequence;
generation information of the first sequence;
a length of the first sequence;
coding and modulation information of the first sequence;
information about a manner in which the second sequence is scrambled by the first sequence;
generation sequence information of the second sequence;
time domain resource position information of the second sequence;
frequency domain resource position information of the second sequence;
waveform information of the second sequence;
structural information of the second sequence;
a length of the second sequence;
coding and modulation information of the second sequence;
a quantity of bits of the first signal or the second sequence that are carried in one OFDM symbol.

39. The apparatus according to any one of claims 35 to 38, wherein,
a length of the first signal has an association relationship with one or more of the following:
a length of the first sequence, a length of the second sequence, a bandwidth of the first signal, a quantity of bits of the first signal or the second sequence that are carried by one OFDM symbol, and a subcarrier spacing; or,
transmission bit information of the first signal is related to one or more of the following: bit information of the second sequence, bit information of a generation sequence of the second sequence, and bit information of the first sequence; or,
time-frequency resource mapping information of the first signal comprises a time-frequency resource mapping manner for the first signal, wherein the time-frequency resource mapping manner comprises:
one bit of the first signal is mapped to one RE resource; or
one bit of the first signal is mapped to P consecutive or non-consecutive REs or RBs, wherein P is related to one or more of the following: the quantity of bits of the first signal or the second sequence that are carried by one OFDM symbol, a quantity of points for least squares (LS) or discrete Fourier transform (DFT) of the second sequence, the bandwidth of the first signal, and the subcarrier spacing, and P is an integer greater than or equal to 1.

40. The apparatus according to claim 39, wherein the association relationship comprises one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, and the quantity of bits of the first signal or the second sequence that are carried by one OFDM symbol, ceiling denotes a ceiling function, and L1 denotes an information bit length or transmission bit length of the second sequence.

41. A signal processing apparatus, applied to a terminal, comprising:
a first receiving unit, configured to receive a first signal;
wherein the first signal comprises a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

42. The apparatus according to claim 41, wherein the different types of waveforms comprise any two of the following:
amplitude shift keying (ASK) waveform, frequency shift keying (FSK) waveform, and orthogonal frequency division multiplexing (OFDM) waveform.

43. The apparatus according to claim 41, further comprising:
a first determining unit, configured to determine first information;
the first receiving unit is further configured to receive the first signal based on the first information, wherein the first information comprises one or more of the following:
time domain resource position information of the first signal;
frequency domain resource position information of the first signal.

44. The apparatus according to claim 43, wherein generation information of the first signal comprises one or more of the following:
a length of the first signal;
transmission bit information of the first signal;
a quantity of terminals indicated by the first signal;
a quantity of terminal groups indicated by the first signal;
a quantity of paging occasions (POs) associated with the first signal;
time-frequency resource mapping information of the first signal;
time domain resource position information of the first signal;
frequency domain resource position information of the first signal;
structural information of the first sequence;
generation information of the first sequence;
coding and modulation information of the first sequence;
length information of the first sequence;
information about a manner in which the second sequence is scrambled by the first sequence;
generation sequence information of the second sequence;
length information of the second sequence;
time domain resource position information of the second sequence;
frequency domain resource position information of the second sequence;
waveform information of the second sequence;
structural information of the second sequence;
coding and modulation information of the second sequence;
a quantity of bits of the first signal or the second sequence that are carried in one OFDM symbol.

45. The apparatus according to claim 43 or 44, wherein a length of the first signal has an association relationship with one or more of the following:
a length of the first sequence, a length of the second sequence, a bandwidth of the first signal, coding and modulation information of the second sequence, a quantity of bits of the first signal or the second sequence that are carried by one OFDM symbol, and a subcarrier spacing.

46. The apparatus according to claim 45, wherein the association relationship comprises one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, the quantity M of bits of the first signal or the second sequence that are carried by one OFDM symbol, and the coding and modulation information of the second sequence, ceiling denotes a ceiling function, and L1 denotes an information bit length or transmission bit length of the second sequence.

47. The apparatus according to claim 41, wherein a position where the second sequence is scrambled by the first sequence is related to one or more of the following: bit information of the first sequence, bit information of the second sequence, the wake-up terminal information carried by the second sequence, the wake-up terminal group information carried by the second sequence, and the wake-up indication information carried by the second sequence; and/or
transmission bit information of the first signal is related to one or more of the following: the bit information of the second sequence, bit information of a generation sequence of the second sequence, and the bit information of the first sequence.

48. The apparatus according to claim 47, wherein the position where the second sequence is scrambled by the first sequence comprises one or more of the following:
at least one sequence position having an information bit of 1 in the generation sequence of the second sequence, or a time domain resource position and/or frequency domain resource position to which the at least one sequence position having the information bit of 1 is mapped;
at least one sequence position having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position carrying the same wake-up indication information, the same wake-up terminal information, or the same wake-up terminal group information as that carried by the first sequence and having an information bit of 1 in the wake-up indication information, the wake-up terminal information, or the wake-up terminal group information carried by the second sequence, or a time domain resource position and/or frequency domain resource position to which the at least one sequence position having the information bit of 1 is mapped;
at least one sequence position having an information bit of a1+b1×j in the generation sequence of the second sequence, or a time domain resource position and/or frequency domain resource position to which the at least one sequence position having the information bit of a1+b1×j is mapped;
at least one sequence position having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position carrying the same wake-up indication information, the same wake-up terminal information, or the same wake-up terminal group information as that carried by the first sequence and having an information bit of a1+b1×j in the wake-up indication information, the wake-up terminal information, or the wake-up terminal group information carried by the second sequence, or a time domain resource position and/or frequency domain resource position to which the at least one sequence position having the information bit of a1+b1×j is mapped;
at least one sequence position being associated with or having the same index as a wake-up terminal index or a wake-up terminal group index carried by the first sequence and having an information bit of 1 in a preamble field of the second sequence, or a time domain resource position and/or frequency domain resource position to which the at least one sequence position having the information bit of 1 is mapped;
at least one sequence position being associated with or having the same index as the wake-up terminal index or the wake-up terminal group index carried by the first sequence and having an information bit of a1+b1×j in the preamble field of the second sequence, or a time domain resource position and/or frequency domain resource position to which the at least one sequence position having the information bit of a1+b1×j is mapped;
at least one sequence position having an information bit of a2+b2×j after coding and modulation in the second sequence, or a time domain resource position and/or frequency domain resource position to which the at least one sequence position having the information bit of a2+b2×j is mapped;
wherein a1, b1, a2 and b2 are any real numbers.

49. The apparatus according to claim 41, wherein the first signal is generated in one or more of the following manners:
at least one position having bit information of 0 in the second sequence is mapped to a number T of zeros, wherein T is related to one or more of a length of the first sequence, a bandwidth of the first signal, and a subcarrier spacing, and T is an integer greater than or equal to 1;
at least one position having bit information of 1 in the second sequence is mapped to at least one first sequence;
at least one position having bit information of a1+b1×j or a2+b2×j in the second sequence is mapped to at least one first sequence;
at least one position having bit information of a1+b1×j or a2+b2×j in the second sequence is mapped to at least one product of a1+b1×j and the first sequence or is mapped to at least one product of a2+b2×j and the first sequence;
wherein a1, b1, a2 and b2 are any real numbers.

50. The apparatus according to claim 44, wherein the time-frequency resource mapping information of the first signal comprises a time-frequency resource mapping manner for the first signal, wherein the time-frequency resource mapping manner comprises:
one bit of the first signal is mapped to one RE resource; or
one bit of the first signal is mapped to P consecutive or non-consecutive REs or RBs, wherein P is related to one or more of the following: a quantity M of bits of the first signal or the second sequence that are carried by one OFDM symbol, a quantity of points for least squares (LS) or discrete Fourier transform (DFT) of the second sequence, a bandwidth of the first signal, and a subcarrier spacing; and P is an integer greater than or equal to 1.

51. The apparatus according to claim 41, wherein the first sequence is generated based on an OFDM waveform and is used for carrying a wake-up signal specific to a first type of receiver;
the second sequence is generated based on an ASK or FSK waveform and is used for carrying a wake-up signal specific to a second type of receiver;
wherein the first type of receiver comprises an OFDM receiver, and the second type of receiver comprises a baseband receiver or a radio frequency receiver.

52. The apparatus according to claim 41, wherein the first sequence is an orthogonal sequence or a random sequence; or
the first sequence is an orthogonal sequence or a random sequence, and the first sequence is generated by cyclic shifting a base sequence; or
the first sequence is an orthogonal sequence or a random sequence, and the first sequence is generated based on a third sequence;
and/or
the second sequence is generated based on an ASK signal or an FSK signal; or
the second sequence is generated based on an ASK signal or an FSK signal, and the second sequence is generated by coding and modulating a generation sequence; or
the second sequence is generated based on an ASK signal or an FSK signal, and the second sequence is a generation sequence.

53. The apparatus according to claim 47, 51 or 52, further comprising:
a first obtaining unit, configured to obtain the wake-up indication information based on the first signal;
wherein the first obtaining unit is further configured to:
obtain the first sequence;
obtain the wake-up indication information carried by the first sequence and/or the wake-up indication information carried by the second sequence.

54. The apparatus according to claim 53, wherein one or more of the first sequence, the second sequence, the wake-up terminal information, and the wake-up terminal group information are related to one or more of the following information:
cell ID, UE ID, paging occasion (PO) index, paging frame (PF) index, subgroup index, UE group ID, and area ID.

55. A signal processing apparatus, applied to a server, comprising:
a first sending unit, configured to send first information to a terminal;
wherein the first information is used for receive a first signal, the first signal comprises a first sequence and a second sequence, the first sequence and the second sequence are used for carrying at least one of the following information for a same terminal or terminal group: wake-up indication information, wake-up terminal information, or wake-up terminal group information, and
the first sequence and the second sequence correspond to different types of waveforms.

56. The apparatus according to claim 55, wherein the different types of waveforms comprise any two of the following:
ASK waveform, FSK waveform, and OFDM waveform.

57. The apparatus according to claim 55, wherein the first information comprises one or more of the following:
generation information of the first signal;
time domain resource position information of the first signal;
frequency domain resource position information of the first signal.

58. The apparatus according to claim 57, wherein the generation information of the first signal comprises one or more of the following:
a length of the first signal;
transmission bit information of the first signal;
time-frequency resource mapping information of the first signal;
time domain resource position information of the first signal;
frequency domain resource position information of the first signal;
a quantity of terminals indicated by the first signal;
a quantity of terminal groups indicated by the first signal;
a quantity of POs associated with the first signal;
structural information of the first sequence;
generation information of the first sequence;
a length of the first sequence;
coding and modulation information of the first sequence;
information about a manner in which the second sequence is scrambled by the first sequence;
generation sequence information of the second sequence;
time domain resource position information of the second sequence;
frequency domain resource position information of the second sequence;
waveform information of the second sequence;
structural information of the second sequence;
a length of the second sequence;
coding and modulation information of the second sequence;
a quantity of bits of the first signal or the second sequence that are carried in one OFDM symbol.

59. The apparatus according to any one of claims 55 to 58, wherein a length of the first signal has an association relationship with one or more of the following:
a length of the first sequence, a length of the second sequence, a bandwidth of the first signal, a quantity of bits of the first signal or the second sequence that are carried by one OFDM symbol, and a subcarrier spacing; or,
transmission bit information of the first signal is related to one or more of the following: bit information of the second sequence, bit information of a generation sequence of the second sequence, and bit information of the first sequence; or,
time-frequency resource mapping information of the first signal comprises a time-frequency resource mapping manner for the first signal, wherein the time-frequency resource mapping manner comprises:
one bit of the first signal is mapped to one RE resource; or
one bit of the first signal is mapped to P consecutive or non-consecutive REs or RBs, wherein P is related to one or more of the following: the quantity of bits of the first signal or the second sequence that are carried by one OFDM symbol, a quantity of points for least squares (LS) or discrete Fourier transform (DFT) of the second sequence, the bandwidth of the first signal, and the subcarrier spacing, and P is an integer greater than or equal to 1.

60. The apparatus according to claim 59, wherein the association relationship comprises one or more of the following: $L = L 1 \times A ;$ $L = ceiling \left(A/M\right) \times B ;$ $L = ceiling \left(A/M\right) ;$ $L = ceiling \left(A/M\right) \times B + C ;$ $L = ceiling \left(A/M\right) + C ;$ wherein, L denotes a signal bit length or time domain duration of the first signal, M denotes the quantity of bits of the first signal or the second sequence that are carried by one OFDM symbol, A, B and C are related to one or more of: a quantity of resource elements (REs) or resource blocks (RBs) occupied by the first signal in frequency domain, the bandwidth of the first signal, the subcarrier spacing, the length of the first sequence, and the quantity of bits of the first signal or the second sequence that are carried by one OFDM symbol, ceiling denotes a ceiling function, and L1 denotes an information bit length or transmission bit length of the second sequence.

61. A processor-readable storage medium storing a computer program for causing a processor to perform the method according to any one of claims 1 to 20.
